# EUROPEAN PATENT SPECIFICATION

(11) **EP 2 925 048 B1**
(45) Date of publication and mention of the grant of the patent: **03.07.2019**
(21) Application number: 12890662.5
(22) Date of filing: 26.12.2012
(51) Int. Cl.: H04W 28/10, H04L 12/825

(54) **METHOD FOR SHARING WIRELESS ACCESS NETWORK, SENDING END, AND RECEIVING END**
VERFAHREN ZUR GEMEINSAMEN NUTZUNG EINES DRAHTLOSEN ZUGANGSNETZWERKS, SENDESEITE UND EMPFÄNGERSEITE
PROCÉDÉ POUR PARTAGER UN RÉSEAU À ACCÈS SANS FIL, EXTRÉMITÉ D'ENVOI ET EXTRÉMITÉ DE RÉCEPTION

(43) Date of publication of application: 30.09.2015
(73) Proprietor: Huawei Technologies Co., Ltd., Longgang District Shenzhen, Guangdong 518129 (CN)
(72) Inventor: LIN, Gang, Shenzhen Guangdong 518129 (CN); CHEN, Yanyan, Shenzhen Guangdong 518129 (CN)
(74) Representative: Kreuz, Georg Maria
(86) International application number: PCT/CN2012/087469
(87) International publication number: WO 2014/100986

(56) References cited:
- WO-A1-2012/079633
- WO-A2-02/37758
- CN-A- 1 725 750
- CN-A- 101 990 250
- CN-A- 101 990 250
- CN-A- 102 123 444
- CN-A- 102 123 444
- US-B2- 8 155 072

## Description

### TECHNICAL FIELD

The present invention relates to the field of radio communications technologies, and in particular, to a radio access network sharing method, a transmit end, and a receive end.

### BACKGROUND

In order to reduce costs, an increasing number of radio operators choose to share radio access network resources with other radio operators, where the radio access network resources include a base station resource, a backhaul transmission resource, a base station controller resource, and the like, so as to reduce network construction costs of the radio operators. When sharing various resources of a radio access network, multiple operators expect that the various resources are fairly used among the multiple operators. Particularly, when the network is congested, it should be ensured that the multiple operators fairly share the radio access network resources, such as end-to-end backhaul transmission resources between a base station and a controller, including an intermediate bearer network. When a transport network is congested, the bearer network can only perform scheduling according to priorities of IP packets, and discard low-priority IP packets. However, the bearer network cannot identify packets of different operators, and it cannot be ensured that the multiple operators fairly share the radio access network resources. For example, an operator A has more high-priority services and fewer low-priority services, and an operator B has fewer high-priority services and more low-priority services. When a backhaul transmission resource is congested, the bearer network has to discard low-priority services. As a result, many service packets of the operator B are discarded, while few packets of the operator A are discarded. In this case, fairness in sharing the backhaul transmission resource between the operators A and B cannot be achieved.

Patent application, CN101990250A, discloses a bandwidth management method applicable to at least two first network devices and a second network device. The at least two first network devices share a transmission channel to perform data transmission with the second network device. The method includes: receiving, by the second network device, real-time traffic information sent by the first network devices; adjusting, by the second network device, transmission bandwidth of the at least two first network devices according to the traffic information and a preset adjustment rule; and sending, by the second network device, the adjusted transmission bandwidth information to the first network devices, so that the first network devices perform the data transmission based on the adjusted transmission bandwidth.

Patent application, CN102123444A, discloses a method sharing transmission bandwidth between different systems. When a first communication system and one or more other communication systems share transmission bandwidth, the method includes: comparing, by a first network element in the first communications system, the sum of rates at which a service is sent to a second network element in the first communications system with bandwidth preconfigured for the second network element; adjusting, by the first network element based on a comparison result, a transmission priority of the service sent to the second network element; and adjusting, by the first network element based on transmission congestion status of the first communications system, sending bandwidth for transmitting the service to the second network element.

Patent application, WO2012/079633A1, discloses an evaluation method where it is detected whether an operator k of at least a part of a communication network gets less than an agreed minimum number of resources/throughput or less than an agreed share of resources/throughput according to a sharing framework. In case it is detected that the operator k does not get less than the agreed minimum number/share of resources/throughput, it is determined that the sharing framework is not violated and this result is stored in a metric m(j). In case it is detected that the operator k gets less than the agreed minimum number/share of resources/throughput, it is detected whether the operator k has enough traffic to be served to fill the agreed minimum number/share of resources/throughput. In case it is detected that the operator k has enough traffic to be served, it is determined that the sharing framework is violated and this result is stored in the metric m(j). In case it is detected that the operator k has not enough traffic to fill its share of the resources, it is determined that the sharing framework is not violated and this result is stored in the metric m(j).

Patent application, US8155072B2, discloses a method for managing resources in shared networks based on a few basic comparisons between resources and/or thresholds. For example, if an access request is received and there are not enough resources available, the request is rejected. If there are resources available, there is a check to see if the resource is in a congested state. If not, then the connection is accepted. If the resource is in a congested state, then a test is performed to determine whether or not the resources will be assigned to an operator who has already exceeded the assigned utilisation. If it has, then the connection is rejected, otherwise it is accepted.

Patent application, WO02/37758A2, discloses an approach for managing dynamic traffic on a shared medium, for example, on a SONET ring, makes use of a central arbiter that communicates with stations coupled to the medium. Each station makes requests to change bandwidth for dynamic traffic entering the medium at that station, and also implements a congestion avoidance algorithm that is coordinated with its requests for changes in bandwidth. The central arbiter responds to the requests from the stations to provide a fair allocation of bandwidth available on the shared medium.

In the prior art, hierarchical quality of service (hierarchical quality of service, "HQoS" for short) is deployed on the bearer network to allocate different logical ports to different operators, so as to perform fair scheduling among the logical ports. During end-to-end backhaul transmission between the base station and the controller, in a shared transmission path, different logical ports are correspondingly allocated to different operators, so as to bear services of corresponding operators. Further, there is a fair scheduling mechanism among these different logical ports, and fairness among the different operators is implemented by means of scheduling of these logical ports. In this solution, it is further required to configure and maintain an information table of an IP address and a corresponding logical port in each transmission device on the bearer network. However, a low-end transmission device does not support an HQoS feature, so that HQoS configuration cannot be performed in many circumstances. In addition, it is required to notify a bearer network department of IP address information of different operators inside thousands of base stations; after obtaining the information, the bearer network department further needs to configure all the information to HQoS logical ports of corresponding transmission devices on the bearer network. Manual configuration involves a heavy workload, and also is error-prone.

### SUMMARY

Embodiments of the present invention provide a radio access network sharing method, a transmit end, and a receive end, which can ensure fairness of data transmission.

The above-mentioned object of the present invention is achieved by the solution provided in the enclosed independent claims.

According to a first aspect, a radio access network sharing method is provided, where when congestion occurs on a transport network, the method includes:
determining, by a receive end according to a fairness rule, whether data transmission from a transmit end to the receive end is fair, where the fairness rule is a transmission bandwidth occupation proportion preset among operators; and
issuing, by the receive end, an instruction to the transmit end according to a result of the determining, so that the transmit end adjusts the data transmission to the receive end according to the instruction.

In a first possible implementation manner, when the result of the determining, by a receive end according to a fairness rule, whether data transmission from a transmit end to the receive end is fair is unfair, the issuing, by the receive end, an instruction to the transmit end according to a result of the determining includes: sending, by the receive end, first feedback information to the transmit end, where the first feedback information includes an operator identifier and a speeding down identifier; and that the transmit end adjusts the data transmission to the receive end according to the instruction includes: the transmit end reduces, according to the operator identifier and the speeding down identifier, a data transmission rate of an operator corresponding to the operator identifier.

In a second possible implementation manner, with reference to the first aspect or the first possible implementation manner of the first aspect, when the result of the determining, by a receive end according to a fairness rule, whether data transmission from a transmit end to the receive end is fair is fair, the issuing, by the receive end, an instruction to the transmit end according to a result of the determining includes: sending, by the receive end, second feedback information to the transmit end, where the second feedback information includes a speeding down stop identifier; and that the transmit end adjusts the data transmission to the receive end according to the instruction includes: the transmit end maintains a current rate of the data transmission to the receive end.

In a third possible implementation manner, with reference to the first aspect or the first or second possible implementation manner of the first aspect, when the result of the determining, by a receive end according to a fairness rule, whether data transmission from a transmit end to the receive end is fair is fair, the issuing, by the receive end, an instruction to the transmit end according to a result of the determining includes: skipping sending, by the receive end, first feedback information to the transmit end anymore; and that the transmit end adjusts the data transmission to the receive end according to the instruction includes: the transmit end maintains a current rate of the data transmission to the receive end.

In a fourth possible implementation manner, with reference to the first aspect or any one of the first to the third possible implementation manners of the first aspect, when the data transmission is uplink data transmission, the receive end is a base station controller or a core network, and the transmit end is a base station; and when the data transmission is downlink data transmission, the receive end is a base station, and the transmit end is a base station controller or a core network.

According to a second aspect, a radio access network sharing method is provided, where when congestion occurs on a transport network, the method includes: acquiring, by a transmit end, an instruction from a receive end, where the instruction is issued, after the receive end determines, according to a fairness rule, whether data transmission from the transmit end to the receive end is fair, by the receive end according to a result of the determining, and the fairness rule is a transmission bandwidth occupation proportion preset among operators; and adjusting, by the transmit end, the data transmission to the receive end according to the instruction.

In a first possible implementation manner, when the result of the determining, by the receive end according to the fairness rule, whether the data transmission from the transmit end to the receive end is fair is unfair, that the instruction is issued, after the receive end determines, according to a fairness rule, whether data transmission from the transmit end to the receive end is fair, by the receive end according to a result of the determining includes: the receive end sends first feedback information to the transmit end, where the first feedback information includes an operator identifier and a speeding down identifier; and the adjusting, by the transmit end, the data transmission to the receive end according to the instruction includes: reducing, by the transmit end according to the operator identifier and the speeding down identifier, a data transmission rate of an operator corresponding to the operator identifier.

In a second possible implementation manner, with reference to the second aspect or the first possible implementation manner of the second aspect, when the result of the determining, by the receive end according to the fairness rule, whether the data transmission from the transmit end to the receive end is fair is fair, that the instruction is issued, after the receive end determines, according to a fairness rule, whether data transmission from the transmit end to the receive end is fair, by the receive end according to a result of the determining includes: the receive end sends second feedback information to the transmit end, where the second feedback information includes a speeding down stop identifier; and the adjusting, by the transmit end, the data transmission to the receive end according to the instruction includes: maintaining, by the transmit end, a current rate of the data transmission to the receive end.

In a third possible implementation manner, with reference to the second aspect or the first possible implementation manner of the second aspect, when the result of the determining, by the receive end according to the fairness rule, whether the data transmission from the transmit end to the receive end is fair is fair, that the instruction is issued, after the receive end determines, according to a fairness rule, whether data transmission from the transmit end to the receive end is fair, by the receive end according to a result of the determining includes: the receive end does not send first feedback information to the transmit end anymore; and the adjusting, by the transmit end, the data transmission to the receive end according to the instruction includes: maintaining, by the transmit end, a current rate of the data transmission to the receive end.

In a fourth possible implementation manner, with reference to the second aspect or any one of the first to the third possible implementation manners of the second aspect, when the data transmission is uplink data transmission, the receive end is a base station controller or a core network, and the transmit end is a base station; and when the data transmission is downlink data transmission, the receive end is a base station, and the transmit end is a base station controller or a core network.

According to a third aspect, a transmit end in a shared radio access network system is provided, where the transmit end includes a first receive module, an adjusting module, and a first transmit module, where the first receive module is configured to acquire an instruction issued by a receive end, where the instruction is issued, after the receive end determines, according to a fairness rule, whether data transmission from the first transmit module to the receive end is fair, by the receive end according to a result of the determining, and the fairness rule is a transmission bandwidth occupation proportion preset among operators; the adjusting module is configured to adjust the data transmission from the first transmit module to the receive end according to the instruction; and the first transmit module is configured to send data according to the adjustment of the adjusting module.

In a first possible implementation manner, when the result of the determining, by the receive end according to the fairness rule, whether the data transmission from the first transmit module to the receive end is fair is unfair, that the instruction is issued, after the receive end determines, according to a fairness rule, whether data transmission from the first transmit module to the receive end is fair, by the receive end according to a result of the determining includes: the receive end sends first feedback information to the first receive module, where the first feedback information includes an operator identifier and a speeding down identifier; and the adjusting module is further configured to reduce, according to the operator identifier and the speeding down identifier, a data transmission rate of the first transmit module for an operator corresponding to the operator identifier.

In a second possible implementation manner, with reference to the third aspect or the first possible implementation manner of the third aspect, when the result of the determining, by the receive end according to the fairness rule, whether the data transmission from the first transmit module to the receive end is fair is fair, that the instruction is issued, after the receive end determines, according to a fairness rule, whether data transmission from the first transmit module to the receive end is fair, by the receive end according to a result of the determining includes: the receive end sends second feedback information to the first receive module, where the second feedback information includes a speeding down stop identifier; and the adjusting module is further configured to maintain a current rate of the data transmission from the first transmit module to the receive end according to the second feedback information.

In a third possible implementation manner, with reference to the third aspect or the first possible implementation manner of the third aspect, when the result of the determining, by the receive end according to the fairness rule, whether the data transmission from the first transmit module to the receive end is fair is fair, that the instruction is issued, after the receive end determines, according to a fairness rule, whether data transmission from the first transmit module to the receive end is fair, by the receive end according to a result of the determining includes: the receive end does not send first feedback information to the first receive module anymore; and the adjusting module is further configured to: when the first receive module does not receive the first feedback information anymore, maintain a current rate of the data transmission from the first transmit module to the receive end.

In a fourth possible implementation manner, with reference to the third aspect or any one of the first to the third possible implementation manners of the third aspect, in a non-Long Term Evolution LTE network, when the data transmission is uplink data transmission, the transmit end is a base station, and the receive end is a base station controller; and when the data transmission is downlink data transmission, the transmit end is a base station controller, and the receive end is a base station.

In a fifth possible implementation manner, with reference to the third aspect or any one of the first to the third possible implementation manners of the third aspect, in an LTE network, when the data transmission is uplink data transmission, the transmit end is a base station, and the receive end is a core network; and when the data transmission is downlink data transmission, the transmit end is a core network, and the receive end is a base station.

According to a fourth aspect, a receive end on a shared radio access network is provided, including a second receive module, a processing module, and a second transmit module, where the second receive module is configured to receive data sent by a transmit end; the processing module is configured to determine, according to a fairness rule, whether data transmission from the transmit end to the second receive module is fair, and the processing module is further configured to issue an instruction to the transmit end according to a result of the determining, where the instruction is that the processing module commands the second transmit module to send feedback information to notify the transmit end, and the fairness rule is a transmission bandwidth occupation proportion preset among operators; and the second transmit module is configured to send the feedback information to the transmit end according to a command of the processing module, so that the transmit end adjusts the data transmission to the second receive module according to the instruction.

In a first possible implementation manner, when the result of the determining, by the processing module according to the fairness rule, whether the data transmission from the transmit end to the second receive module is fair is unfair, that the processing module issues an instruction to the transmit end according to a result of the determining, where the instruction is that the processing module commands the second transmit module to send feedback information to notify the transmit end includes: the processing module commands the second transmit module to send first feedback information to the transmit end, where the first feedback information includes an operator identifier and a speeding down identifier; and that the transmit end adjusts the data transmission to the second receive module according to the instruction includes: the transmit end reduces, according to the operator identifier and the speeding down identifier, a data transmission rate of an operator corresponding to the operator identifier.

In a second possible implementation manner, with reference to the fourth aspect or the first possible implementation manner of the fourth aspect, when the result of the determining, by the processing module according to the fairness rule, whether the data transmission from the transmit end to the second receive module is fair is fair, that the processing module issues an instruction to the transmit end according to a result of the determining, where the instruction is that the processing module commands the second transmit module to send feedback information to notify the transmit end includes: the processing module commands the second transmit module to send second feedback information to the transmit end, where the second feedback information includes a speeding down stop identifier; and that the transmit end adjusts the data transmission to the second receive module according to the instruction includes: the transmit end maintains a current rate of the data transmission to the second receive module.

In a third possible implementation manner, with reference to the first possible implementation manner of the fourth aspect, when the result of the determining, by the processing module according to the fairness rule, whether the data transmission from the transmit end to the second receive module is fair is fair, the processing module is configured to issue an instruction to the transmit end according to the result of the determining, where the instruction is that the processing module commands the second transmit module to stop sending first feedback information to the transmit end, so that the transmit end maintains a current rate of the data transmission to the second receive module. In a fourth possible implementation manner, with reference to the fourth aspect or any one of the first to the third possible implementation manners of the fourth aspect, in a non-LTE network, when the data transmission is uplink data transmission, the transmit end is a base station, and the receive end is a base station controller; and when the data transmission is downlink data transmission, the transmit end is a base station controller, and the receive end is a base station.

In a fifth possible implementation manner, with reference to the fourth aspect or any one of the first to the third possible implementation manners of the fourth aspect, in an LTE network, when the data transmission is uplink data transmission, the transmit end is a base station, and the receive end is a core network; and when the data transmission is downlink data transmission, the transmit end is a core network, and the receive end is a base station.

According to a fifth aspect, a transmit end in a shared radio access network system is provided, where the transmit end includes a first receiver, a first processor, and a first transmitter, where the first receiver is configured to acquire an instruction issued by a receive end, where the instruction is issued, after the receive end determines, according to a fairness rule, whether data transmission from the first transmitter to the receive end is fair, by the receive end according to a result of the determining, and the fairness rule is a transmission bandwidth occupation proportion preset among operators; the first processor is configured to adjust the data transmission from the first transmitter to the receive end according to the instruction; and the first transmitter is configured to send data according to the adjustment of the first processor.

In a first possible implementation manner, when the result of the determining, by the receive end according to the fairness rule, whether the data transmission from the first transmitter to the receive end is fair is unfair, that the instruction is issued, after the receive end determines, according to a fairness rule, whether data transmission from the first transmitter to the receive end is fair, by the receive end according to a result of the determining includes: the receive end sends first feedback information to the first receiver, where the first feedback information includes an operator identifier and a speeding down identifier; and the first processor is further configured to reduce, according to the operator identifier and the speeding down identifier, a data transmission rate of the first transmitter for an operator corresponding to the operator identifier.

In a second possible implementation manner, with reference to the fifth aspect or the first possible implementation manner of the fifth aspect, when the result of the determining, by the receive end according to the fairness rule, whether the data transmission from the first transmitter to the receive end is fair is fair, that the instruction is issued, after the receive end determines, according to a fairness rule, whether data transmission from the first transmitter to the receive end is fair, by the receive end according to a result of the determining includes: the receive end sends second feedback information to the first receiver, where the second feedback information includes a speeding down stop identifier; and the first processor is further configured to maintain a current rate of the data transmission from the first transmitter to the receive end according to the second feedback information.

In a third possible implementation manner, with reference to the fifth aspect or the first possible implementation manner of the fifth aspect, when the result of the determining, by the receive end according to the fairness rule, whether the data transmission from the first transmitter to the receive end is fair is fair, that the instruction is issued, after the receive end determines, according to a fairness rule, whether data transmission from the first transmitter to the receive end is fair, by the receive end according to a result of the determining includes: the receive end does not send first feedback information to the first receiver anymore; and the first processor is further configured to: when the first receiver does not receive the first feedback information anymore, maintain a current rate of the data transmission from the first transmitter to the receive end.

In a fourth possible implementation manner, with reference to the fifth aspect or any one of the first to the third possible implementation manners of the fifth aspect, in a non-Long Term Evolution LTE network, when the data transmission is uplink data transmission, the transmit end is a base station, and the receive end is a base station controller; and when the data transmission is downlink data transmission, the transmit end is a base station controller, and the receive end is a base station.

In a fifth possible implementation manner, with reference to the fifth aspect or any one of the first to the third possible implementation manners of the fifth aspect, in an LTE network, when the data transmission is uplink data transmission, the transmit end is a base station, and the receive end is a core network; and when the data transmission is downlink data transmission, the transmit end is a core network, and the receive end is a base station.

According to a sixth aspect, a receive end on a shared radio access network is provided, including a second receiver, a second processor, and a second transmitter, where the second receiver is configured to receive data sent by a transmit end; the second processor is configured to determine, according to a fairness rule, whether data transmission from the transmit end to the second receiver is fair, and is further configured to issue an instruction to the transmit end according to a result of the determining, where the instruction is that the second processor commands the second transmitter to send feedback information to notify the transmit end, and the fairness rule is a transmission bandwidth occupation proportion preset among operators; and the second transmitter is configured to send the feedback information to the transmit end according to a command of the second processor, so that the transmit end adjusts the data transmission to the second receiver according to the instruction.

In a first possible implementation manner, when the result of the determining, by the second processor according to the fairness rule, whether the data transmission from the transmit end to the second receiver is fair is unfair, that the second processor issues an instruction to the transmit end according to a result of the determining, where the instruction is that the second processor commands the second transmitter to send feedback information to notify the transmit end includes: the second processor commands the second transmitter to send first feedback information to the transmit end, where the first feedback information includes an operator identifier and a speeding down identifier; and that the transmit end adjusts the data transmission to the second receiver according to the instruction includes: the transmit end reduces, according to the operator identifier and the speeding down identifier, a data transmission rate of an operator corresponding to the operator identifier.

In a second possible implementation manner, with reference to the sixth aspect or the first possible implementation manner of the sixth aspect, when the result of the determining, by the second processor according to the fairness rule, whether the data transmission from the transmit end to the second receiver is fair is fair,
that the second processor issues an instruction to the transmit end according to a result of the determining, where the instruction is that the second processor commands the second transmitter to send feedback information to notify the transmit end includes: the second processor commands the second transmitter to send second feedback information to the transmit end, where the second feedback information includes a speeding down stop identifier; and that the transmit end adjusts the data transmission to the second receiver according to the instruction includes: the transmit end maintains a current rate of the data transmission to the second receiver.

In a third possible implementation manner, with reference to the first possible implementation manner of the sixth aspect, when the result of the determining, by the second processor according to the fairness rule, whether the data transmission from the transmit end to the second receiver is fair is fair, the second processor is configured to issue an instruction to the transmit end according to the result of the determining, where the instruction is that the second processor commands the second transmitter to stop sending first feedback information to the transmit end, so that the transmit end maintains a current rate of the data transmission to the second receiver.

In a fourth possible implementation manner, with reference to the sixth aspect or any one of the first to the third possible implementation manners of the sixth aspect, in a non-LTE network, when the data transmission is uplink data transmission, the transmit end is a base station, and the receive end is a base station controller; and when the data transmission is downlink data transmission, the transmit end is a base station controller, and the receive end is a base station.

In a fifth possible implementation manner, with reference to the sixth aspect or any one of the first to the third possible implementation manners of the sixth aspect, in an LTE network, when the data transmission is uplink data transmission, the transmit end is a base station, and the receive end is a core network; and when the data transmission is downlink data transmission, the transmit end is a core network, and the receive end is a base station.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of an access network sharing method according to an embodiment of the present invention;
FIG. 2 is a schematic diagram of an example of a fairness rule according to an embodiment of the present invention;
FIG. 3 is another schematic flowchart of an access network sharing method according to an embodiment of the present invention;
FIG 4 is a schematic block diagram of a transmit end according to an embodiment of the present invention;
FIG. 5 is a schematic block diagram of a receive end according to an embodiment of the present invention;
FIG. 6 is a schematic block diagram of a transmit end according to another embodiment of the present invention; and
FIG 7 is a schematic block diagram of a receive end according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as: a Global System of Mobile Communications (Global System of Mobile Communications, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, an LTE time division duplex (Time Division Duplex, "TDD" for short), a Universal Mobile Telecommunications System (Universal Mobile Telecommunication System, "UMTS" for short), a Worldwide Interoperability for Microwave Access (Worldwide Interoperability for Microwave Access, "WiMAX" for short) communications system or the like.

In the embodiments of the present invention, a base station may be a base station (Base Transceiver Station, "BTS" for short) in GSM or CDMA, may also be a base station (NodeB, "NB" for short) in the WCDMA, and may further be an evolved NodeB (Evolutional Node B, "ENB" "or "eNodeB" for short) in LTE, which is not limited in the present invention.

In the embodiments of the present invention, the base station controller may be a base station controller (Base Station Controller, "BSC" for short) in GSM or CDMA, or a radio network controller (Radio Network Controller, "RNC" for short) in UMTS, which is not limited in the present invention.

To make the foregoing objectives, features, and advantages of the embodiments of the present invention more evident and comprehensible, the following further describes the embodiments of the present invention in detail with reference to the accompanying drawings and specific implementation manners.

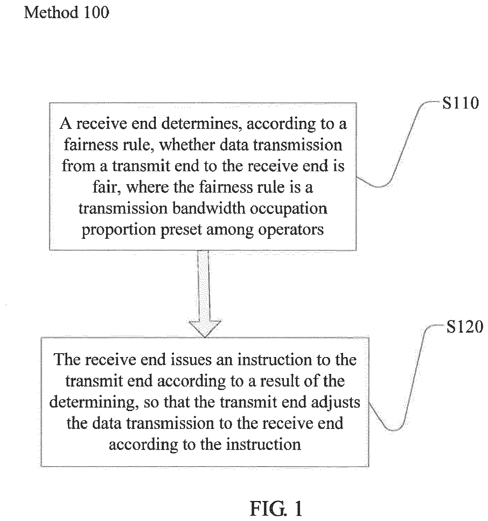

FIG. 1 is a schematic flowchart of a radio access network resource sharing method 100 according to the present invention.

In a communications system to which this embodiment is applied, multiple operators share access network resources, including a base station resource, a backhaul network resource, and a base station controller resource. When sharing various resources of a radio access network, the multiple operators require that the various resources be used fairly. An existing radio base station and base station controller can identify services of different operators, and it can be ensured inside the radio base station and controller devices that the multiple operators fairly share the various resources, which includes that fairness among the different operators can be ensured on backhaul network transmission egresses of these devices, where a bearer network is responsible for data transmission on a backhaul network between the base station and the base station controller.

As shown in FIG. 1, the radio access network sharing method 100 according to this embodiment of the present invention includes: when congestion occurs on a transport network:
S110: A receive end determines, according to a fairness rule, whether data transmission from a transmit end to the receive end is fair, where the fairness rule is a transmission bandwidth occupation proportion preset among operators.
S120: The receive end issues an instruction to the transmit end according to a result of the determining, so that the transmit end adjusts the data transmission to the receive end according to the instruction.

In this embodiment of the present invention, the receive end determines, according to the fairness rule, whether the data transmission from the transmit end is fair, and issues, according to the result of the determining, the instruction for the transmission from the transmit end, so that the transmit end adjusts the data transmission according to the instruction. Therefore, the transmit end can flexibly adjust the transmission according to the instruction, and fairness of the data transmission is implemented by means of transmission adjustment.

Optionally, before S110, the method further includes:
S130: Determine whether congestion occurs on the transport network; and when it is determined that congestion occurs on the transport network, execute the method in S110, or when it is determined that congestion does not occur on the transport network, skip adjusting the data transmission.

A bearer network, as the transport network, is responsible for data communication between the transmit end and the receive end.

The transmit end and the receive end perform data communication by using the bearer network, where the data communication includes uplink data transmission and downlink data transmission.

In a case in which congestion does not occur on the bearer network, existing network bandwidth can meet data transmission requirements of different operators, each operator may use surplus bandwidth, and data transmission from the transmit end may not be adjusted; in a case in which congestion occurs on the bearer network, the receive end needs to determine whether the data transmission is fair.

In a non-LTE network system, a process of determining whether congestion occurs on the transport network may include: a base station and a base station controller may detect whether congestion occurs on a backhaul transport network. For example, by means of IP performance monitoring (IP Performance Monitoring, "IPPM" for short) performance statistics collection, whether the backhaul transport network is congested is determined by monitoring whether there is a packet loss in the backhaul transport network. In uplink data communication, the base station initiates uplink IPPM performance statistics collection, and the base station controller collects statistics about a quantity of received packets, and feeds back to the base station. The base station collects statistics about a quantity of packets sent in a specific period of time, and compares the quantity of sent packets with the quantity of packets actually received by the base station controller. If the quantity of packets actually received by the base station controller is equal to the quantity of packets sent by the base station, it can be determined that a packet loss does not occur on the bearer network during a transmission process and that congestion does not occur on the transport network; or if the quantity of packets actually received by the base station controller is less than the quantity of packets sent by the base station, it can be determined that a packet loss occurs on the bearer network during a transmission process and that congestion occurs on the transport network. In downlink data transmission, the base station controller initiates downlink IPPM performance statistics collection, and the base station collects statistics about a quantity of received packets, and feeds back a result to the base station controller. The base station controller collects statistics about a quantity of packets sent in a specific period of time, and compares the quantity of sent packets with the quantity of packets actually received by the base station. If the quantity of packets actually received by the base station is equal to the quantity of packets sent by the base station controller, it can be determined that a packet loss does not occur on the bearer network during a transmission process and that congestion does not occur on the transport network; or if the quantity of packets actually received by the base station is less than the quantity of packets sent by the base station controller, it can be determined that a packet loss occurs on the bearer network during a transmission process and that congestion occurs on the transport network.

A difference between a method for determining whether congestion occurs on the transport network in an LTE network system and that in the non-LTE network system lies in that: in the LTE network system, a core network plays a role of the base station controller in the non-LTE network system in determining whether the network is congested. Therefore, for the method for determining whether congestion occurs on the transport network in the LTE network system, reference may be made to the method in the non-LTE network system, and details are not described herein again.

S110: A receive end determines, according to a fairness rule, whether data transmission from a transmit end to the receive end is fair, where the fairness rule is a transmission bandwidth occupation proportion preset among operators.

In S110, the transmit end and the receive end perform data communication by using the bearer network. The data communication includes uplink data transmission and downlink data transmission. In the non-LTE network system, when the data transmission is uplink data transmission, the receive end is the base station controller, and the transmit end is the base station; when the data transmission is downlink data transmission, the receive end is the base station, and the transmit end is the base station controller. In the LTE network system, when the data transmission is uplink data transmission, the receive end is the core network, and the transmit end is the base station; when the data transmission is downlink data transmission, the receive end is the base station, and the transmit end is the core network.

The receive end determines, according to the fairness rule, whether the data transmission is fair. The fairness rule may include: if each operator presets a bandwidth sharing proportion of a shared access network, each operator uses shared bandwidth according to the sharing proportion in accordance with the bandwidth sharing proportion of the shared access network preset by the operator. When congestion occurs on the transport network, if the bearer network can perform transmission according to the previously preset bandwidth sharing proportion, the transmission in this case is fair; if a result of actual transmission on the bearer network does not meet the previously preset bandwidth sharing proportion, the transmission in this case is unfair.

Alternatively, the fairness rule may be that: if no bandwidth sharing proportion of a shared access network is agreed among the operators, each operator equally uses transmission bandwidth.

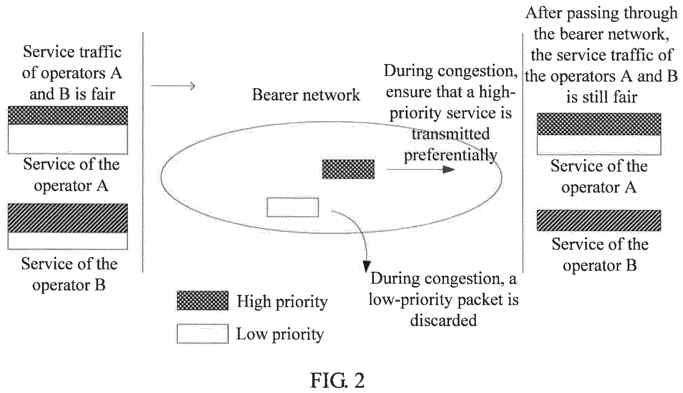

Based on the radio access network sharing method shown in FIG. 1, FIG. 2 further shows a fairness rule by giving an example. As shown in FIG. 2, in uplink data transmission, an operator A and an operator B preset bandwidth sharing proportions of a shared access network, where what is preset is that: when congestion occurs on a network, the operator A occupies 60% of transmission bandwidth, and the operator B occupies 40% of the transmission bandwidth. Amounts of data that needs to be transmitted at a base station end by the operators A and B are the same. In the data to be transmitted by the operator A, high-priority data to be transmitted accounts for 30% of the data to be transmitted, and low-priority data to be transmitted accounts for 70% of the data to be transmitted. In the data to be transmitted by the operator B, high-priority data to be transmitted accounts for 60% of the data to be transmitted, and low-priority data to be transmitted accounts for 30% of the data to be transmitted. Black represents a high-priority service, and white represents a low-priority service. When congestion occurs on the transport network, it is ensured that the high-priority service is transmitted preferentially. When the bearer network is congested, among data received by a base station controller after the data is transmitted through the bearer network, data of the operator A accounts for 60% of the data received by the base station controller, and data of the operator B accounts for 40% of the data received by the base station controller. Therefore, in this case, service traffic of the operators A and B is still fair, and radio access network resources are equally shared by the operators A and B. The bearer network separately and preferentially transmits data with a relatively high priority in service data to be transmitted by the operators A and B.

The receive end determines a transmission result. The receive end performs real-time statistics collection on the received data of the different operators, and determines whether service bandwidth of the operators meets the preset sharing proportions. If the service bandwidth of the operators meets the preset sharing proportions, the receive end determines that the data transmission is fair; if the service bandwidth of the operators does not meet the preset sharing proportions, the receive end determines that the data transmission is unfair. Alternatively, if no sharing proportion is preset for the operators, the receive end determines whether the service bandwidth is equally allocated between the operators. If the service bandwidth is equally allocated between the operators, the receive end determines that the data transmission is fair; if the service bandwidth is not equally allocated between the operators, the receive end determines that the data transmission is unfair.

The receive end may periodically determine, according to a preset period, whether the data transmission is fair.

S120: The receive end issues an instruction to the transmit end according to a result of the determining, so that the transmit end adjusts the data transmission to the receive end according to the instruction. The receive end and the transmit end are as described in S110, and details are not described herein again.

Optionally, in S120, if the result of the determining is that the data transmission is unfair, the receive end issues the instruction to the transmit end by sending first feedback information. Herein, the first feedback information includes an operator identifier and a speeding down identifier, where the operator identifier is used to identify an operator who uses, during a process of unfair transmission, more bandwidth than shared bandwidth that can be occupied by the operator. The speeding down identifier is used to trigger the transmit end to reduce a data transmission rate of the operator corresponding to the operator identifier. The speeding down identifier may further include information about a data transmission unfairness degree determined by the receive end, where the unfairness degree is that: the unfairness degree is higher if more bandwidth of another operator is occupied by the operator who uses more bandwidth than the shared bandwidth that can be occupied by the operator; the unfairness degree is lower if less bandwidth of another operator is occupied by the operator who uses more bandwidth than the shared bandwidth that can be occupied by the operator.

For example, in a WCDMA system, there is a user-level feedback signal, such as a flow control message signal of high speed downlink packet access (High Speed Downlink Packet Access, "HSDPA" for short)/high speed uplink packet access (High Speed Uplink Packet Access, HSUPA for short), between a base station and a base station controller. In the WCDMA system, the receive end may use the flow control message signal as the first feedback information. Because each operator has its own HSDPA/HSUPA flow control message signal, selecting an HSDPA/HSUPA flow control message signal of an operator is equivalent to identifying the operator. Therefore, optionally, in the WCDMA system, an HSDPA/HSUPA flow control message signal of an operator may be selected as the operator identifier in the first feedback information. The HSDPA/HSUPA flow control message signal may trigger the receive end to reduce a data transmission rate of the operator corresponding to the HSDPA/HSUPA flow control message signal. Optionally, the HSDPA/HSUPA flow control message signal may be used as the speeding down identifier, and the HSDPA/HSUPA flow control message signal is sent constantly.

In a downlink direction, for an HSDPA service, transmission traffic of the downlink HSDPA service is adjusted by using an existing flow control message signal between the base station and base station controller. When the base station determines that the transmission is unfair, for an HSDPA service of an operator that occupies more transmission bandwidth, the base station periodically sends an "HS-DSCH CAPACITY ALLOCATION" message to the controller by using a flow control message signal of the operator, to require the controller to perform speeding down on the HSDPA service of the operator, where "CAPACITY" information therein identifies how much transmission rate needs to be reduced each time the transmit end receives the message.

The receive end may keep determining, in a periodic manner, whether the data transmission is fair. When determining that the data transmission is fair, the receive end stops sending the first feedback information. After the base station controller does not receive the first feedback message anymore, the base station controller stops reducing a transmission rate, and maintains the current transmission rate.

In an uplink direction, for an HSUPA service, when the base station controller determines that data transmission of the base station is unfair, for an HSUPA service of an operator that occupies more transmission bandwidth, the base station controller sends a "TNL CONGESTION INDICATION" message to the base station, to require the base station to perform speeding down on the HSUPA service of the operator who uses more bandwidth than bandwidth that can be occupied by the operator. In this case, the base station controller may also additionally send the base station another message that includes a data transmission unfairness degree determined by the receive end. The "TNL CONGESTION INSTRUCTION" message and the message including the data transmission unfairness degree determined by the receive end form the first feedback information.

The receive end may keep determining, in a periodic manner, whether the data transmission is fair. When the receive end determines that the data transmission is fair, the base station controller stops sending the first feedback information. When the base station, as the transmit end, does not receive the first feedback information anymore, the base station stops reducing a transmission rate, and maintains the current transmission rate.

In a non-WCDMA system, in a case in which no existing flow control message signal can be adopted, the receive end may send dedicated first feedback information to the transmit end, where the first feedback information may include an operator identifier and a speeding down identifier. The operator identifier identifies an operator who uses, during a process of unfair transmission, more bandwidth than bandwidth of a preset proportion that can be occupied by the operator, that is, an operator who uses more bandwidth than shared bandwidth that can be occupied by the operator. The speeding down identifier triggers the transmit end to reduce a data transmission rate of the corresponding operator. Optionally, the speeding down identifier may also include information about a data transmission unfairness degree determined by the receive end. Therefore, after receiving the first feedback information, the transmit end performs, according to the operator identifier in the first feedback information, gradual speeding down on transmission of a service of the operator corresponding to the operator identifier; the transmit end analyzes, according to the speeding down identifier in the first feedback information, the unfairness degree included in the speeding down identifier, to obtain how to gradually reduce the transmission rate. If the unfairness degree is high, the transmit end gradually reduces the transmission rate by a relatively large margin; if the unfairness degree is relatively low, the transmit end gradually reduces the transmission rate by a relatively small margin.

In S110, if the result of the determining is that the data transmission from the data transmit end is fair, optionally, the receive end sends second feedback information to the transmit end. Herein, the second feedback information includes a speeding down stop identifier. In S130, after it is determined that congestion occurs on the transport network, regardless of whether the result of the determining for the first time in S110 is fair or the result of the determining in S110 is fair after the transmit end adjusts the transmission rate, the receive end sends the speeding down stop identifier, so that the transmit end maintains a current transmission status.

Optionally, if the result of the determining in S110 is that the data transmission from the data transmit end is fair, when the transmit end adjusts the transmission after receiving the first feedback information, stopping sending the first feedback information may be selected as an instruction, so that the transmit end does not adjust the data transmission anymore and maintains the current transmission rate.

The receive end sends the first feedback information or the second feedback information to the transmit end through the bearer network.

In the access network sharing method according to this embodiment of the present invention, a receive end determines fairness of data transmission, and a transmit end flexibly adjusts a transmission rate according to a result of the determining. Further, the fairness is monitored continuously, so that the transmit end can adjust the transmission rate at any time and maintain stability of a fair state.

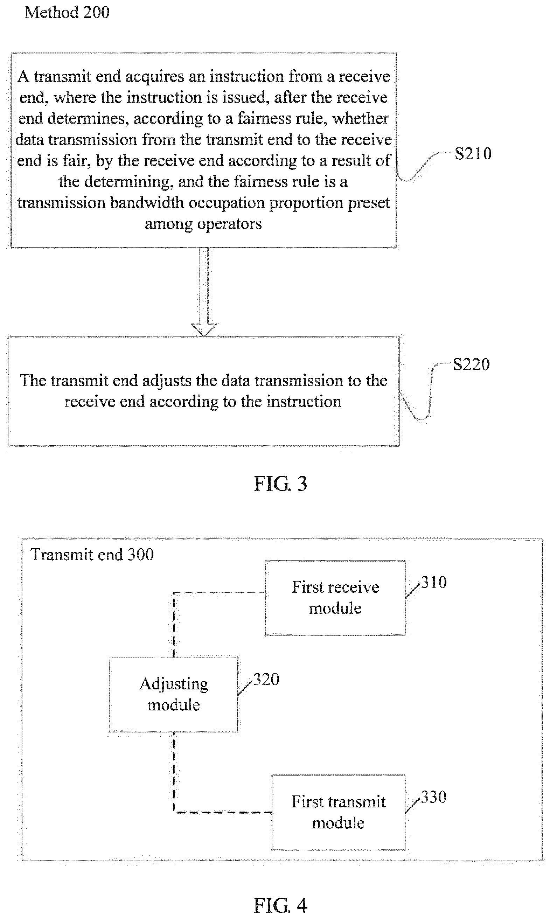

FIG. 3 shows a schematic flowchart of a radio access network sharing method 200 according to another embodiment of the present invention. FIG. 3 and the method disclosed in the description of FIG. 3 may be based on the radio access network sharing method disclosed in FIG. 1 and FIG. 2 of the embodiments of the present invention. The method 200 includes: when congestion occurs on a transport network:
S210: A transmit end acquires an instruction from a receive end, where the instruction is issued, after the receive end determines, according to a fairness rule, whether data transmission from the transmit end to the receive end is fair, by the receive end according to a result of the determining, and the fairness rule is a transmission bandwidth occupation proportion preset among operators.
S220: The transmit end adjusts the data transmission to the receive end according to the instruction.

In this embodiment of the present invention, the transmit end adjusts the data transmission by following the instruction from the receive end. Because the instruction is issued by the receive end after the receive end determines, according to the fairness rule, whether the data transmission from the transmit end to the receive end is fair, the transmit end can flexibly adjust the transmission according to the instruction, and fairness of the data transmission is implemented by means of transmission adjustment.

In a communications system to which this embodiment is applied, multiple operators share access network resources, including a base station resource, a backhaul network resource, and a base station controller resource. When sharing various resources of a radio access network, the multiple operators require that the various resources be used fairly. An existing radio base station and base station controller can identify services of different operators, and it can be ensured inside the radio base station and controller devices that the multiple operators fairly share the various resources, which includes that fairness among the different operators can be ensured on backhaul network transmission egresses of these devices, where a bearer network is responsible for data transmission on a backhaul network between the base station and the base station controller.

Optionally, before S210, the method further includes:
S230: Determine whether congestion occurs on the transport network; and when it is determined that congestion occurs on the transport network, execute the method in S210, or when it is determined that congestion does not occur on the transport network, skip adjusting the data transmission.

The bearer network, as the transport network, is responsible for data communication between the transmit end and the receive end. The transmit end and the receive end perform data communication by using the bearer network, where the data communication includes uplink data transmission and downlink data transmission.

In a case in which congestion does not occur on the bearer network, existing network bandwidth can meet data transmission requirements of different operators, each operator may use surplus bandwidth, and data transmission from the transmit end may not be adjusted; in a case in which congestion occurs on the bearer network, the receive end needs to determine whether the data transmission is fair.

The step of determining whether congestion occurs on the transport network in S230 is as described in S130, and details are not described herein again.

When congestion occurs on the transport network:
S210: A transmit end acquires an instruction from a receive end, where the instruction is issued, after the receive end determines, according to a fairness rule, whether data transmission from the transmit end to the receive end is fair, by the receive end according to a result of the determining, and the fairness rule is a transmission bandwidth occupation proportion preset among operators.

The base station and the base station controller perform data communication by using the bearer network, where the data communication includes uplink data transmission and downlink data transmission. In a non-LTE network system, when the data transmission is uplink data transmission, the receive end is the base station controller, and the transmit end is the base station; when the data transmission is downlink data transmission, the receive end is the base station, and the transmit end is the base station controller. In an LTE network system, when the data transmission is uplink data transmission, the receive end is a core network, and the transmit end is the base station; when the data transmission is downlink data transmission, the receive end is the base station, and the transmit end is a core network.

In S210, the receive end determines, according to the fairness rule, whether the data transmission from the transmit end to the receive end is fair. The fairness rule is as described in S110, and details are not described herein again.

Optionally, if the receive end determines, according to the fairness rule, that the data transmission from the transmit end to the receive end is unfair, the receive end issues the instruction to the transmit end by sending first feedback information. Herein, the first feedback information includes an operator identifier and a speeding down identifier, where the operator identifier is used to identify an operator who uses, during a process of unfair transmission, more bandwidth than shared bandwidth that can be occupied by the operator. The speeding down identifier is used to trigger the transmit end to reduce a data transmission rate of the operator corresponding to the operator identifier. Optionally, the speeding down identifier may further include information about a data transmission unfairness degree determined by the receive end, where the unfairness degree is determined as follows: the unfairness degree is higher if more bandwidth of another operator is occupied by the operator who uses more bandwidth than the shared bandwidth that can be occupied by the operator; the unfairness degree is lower if less bandwidth of another operator is occupied by the operator who uses more bandwidth than the shared bandwidth that can be occupied by the operator.

Optionally, when the transmit end adjusts the transmission after continuously receiving the first feedback information, the receive end may send the first feedback information in a continuous manner. Optionally, if the receive end determines, according to the fairness rule, that the data transmission from the transmit end to the receive end is fair, optionally, the receive end sends second feedback information to the transmit end. Herein, the second feedback information includes a speeding down stop identifier. In S230, after it is determined that congestion occurs on the transport network, regardless of whether the result of the determining for the first time in S210 is fair or the result of the determining in S210 is fair after the transmit end adjusts the transmission rate, the receive end sends the speeding down stop identifier, so that the transmit end maintains a current transmission status.

Optionally, if the result of the determining in S210 is that the data transmission is fair, when the transmit end adjusts the transmission after receiving the first feedback information, stopping sending the first feedback information may be selected as an instruction, so that the transmit end stops adjusting the data transmission and maintains the current transmission rate.

The receive end sends the first feedback information or the second feedback information to the receive end through the bearer network. The transmit end receives the feedback information from the receive end through the bearer network.

S220: The transmit end adjusts the data transmission to the receive end according to the instruction.

When the feedback information received by the transmit end is the first feedback information, the transmit end adjusts the transmission rate according to the first feedback information. The base station reduces the data transmission rate of the operator according to the operator identifier in the first feedback information. The speeding down identifier in the first feedback information includes the information about the data transmission unfairness degree sent by the receive end. The transmit end analyzes the unfairness degree included in the speeding down identifier according to the data transmission unfairness degree, to obtain a method of how to gradually reduce the transmission rate. If the unfairness degree is high, the transmit end gradually reduces the transmission rate by a relatively large margin; if the unfairness degree is relatively low, the transmit end gradually reduces the transmission rate by a relatively small margin. After adjustment of the transmission rate, in a transmit end device, for data that is of the operator that occupies more bandwidth than the bandwidth that can be occupied by the operator and that is temporarily not sent because of the speeding down, if an inner data zone of the transmit end is not full, the data that is temporarily not sent because of the speeding down is temporarily stored in the inner data zone and is sent later; if the inner data zone of the transmit end is full, the data that is temporarily not sent because of the speeding down is discarded, and available bandwidth is released for another operator for use.

The transmit end gradually reduces a data transmission rate of a service of the operator corresponding to the operator identifier in the first feedback information, so that the data transmission rate of the operator is gradually reduced. When the reduced rate achieves transmission fairness among the operators, optionally, the transmit end may receive the second feedback information sent by the receive end in this case. According to the second feedback information, the transmit end stops reducing the transmission rate and maintains a current transmission status.

If the transmit end receives the second feedback information for the first time or after rate adjustment, the transmit end maintains the current transmission rate according to the second feedback information, that is, maintains the current transmission rate at which transmission fairness is achieved among the operators.

Optionally, if the transmit end does not receive the first feedback information anymore after the transmit end adjusts the transmission according to the received first feedback information, the transmit end stops adjusting the data transmission and maintains the current transmission rate.

In this embodiment of the present invention, a transmit end receives feedback information from a receive end, and adjusts transmission according to the feedback information. In a system where multiple operators share a radio access network, because the transmit end cannot learn a transmission fairness situation, the transmit end cannot adjust the transmission according to the fairness situation. However, after the transmit end receives the feedback information sent from the receive end, the transmit end can adjust the transmission according to information included in the feedback information, so as to achieve transmission fairness.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

The foregoing describes in detail the radio access network sharing methods according to the embodiments of the present invention with reference to FIG. 1 to FIG. 3, and the following describes in detail a transmit end and a receive end according to the embodiments of the present invention with reference to FIG. 4 to FIG. 7.

FIG. 4 shows a schematic block diagram of a transmit end 300 according to an embodiment of the present invention. FIG. 4 and the the transmit end 300 disclosed in the description of FIG. 4 may be based on the radio access network sharing methods disclosed in FIG. 1 and FIG. 2 of the embodiments of the present invention and FIG. 3 of the embodiments of the present invention.

This embodiment is applicable to a case in which congestion occurs on a transport network. A bearer network, as the transport network, is responsible for data communication between the transmit end and a receive end. The transmit end 300 and the receive end perform data communication by using the bearer network, where the data communication includes uplink data transmission and downlink data transmission.

In a case in which congestion does not occur on the bearer network, existing network bandwidth can meet data transmission requirements of different operators, each operator may use surplus bandwidth, and data transmission from the transmit end 300 may not be adjusted; in a case in which congestion occurs on the bearer network, the receive end needs to determine whether the data transmission is fair. A step of determining whether congestion occurs on the transport network is as described in S130, and details are not described herein again.

As shown in FIG. 4, the transmit end 300 includes a first receive module 310, an adjusting module 320, and a first transmit module 330.

The first receive module 310 is configured to acquire an instruction issued by the receive end, where the instruction is issued, after the receive end determines, according to a fairness rule, whether data transmission from the first transmit module 330 to the receive end is fair, by the receive end according to a result of the determining, and the fairness rule is a transmission bandwidth occupation proportion preset among operators.

The adjusting module 320 is configured to adjust the data transmission from the first transmit module 330 to the receive end according to the instruction.

The first transmit module 330 is configured to send data according to the adjustment of the adjusting module 320.

In this embodiment of the present invention, the first receive module 310 is further configured to receive first feedback information and second feedback information.

Optionally, if the receive end determines, according to the fairness rule, that the data transmission from the first transmit module 330 to the receive end is unfair, the receive end issues the instruction by sending the first feedback information to the first receive module 310. The first feedback information includes an operator identifier and a speeding down identifier, where the operator identifier is used to identify an operator who uses, during a process of unfair transmission, more bandwidth than shared bandwidth that can be occupied by the operator. The speeding down identifier is used to trigger the transmit end to reduce a data transmission rate of the operator corresponding to the operator identifier. Optionally, the speeding down identifier may further include information about a data transmission unfairness degree determined by the receive end, where the unfairness degree is determined as follows: the unfairness degree is higher if more bandwidth of another operator is occupied by the operator who uses more bandwidth than the shared bandwidth that can be occupied by the operator; the unfairness degree is lower if less bandwidth of another operator is occupied by the operator who uses more bandwidth than the shared bandwidth that can be occupied by the operator.

Optionally, if the receive end determines, according to the fairness rule, that the data transmission from the first transmit module 330 to the receive end is fair, optionally, the receive end sends the second feedback information to the first receive module 310. Herein, the second feedback information includes a speeding down stop identifier.

Optionally, if the receive end determines, according to the fairness rule, that the data transmission from the transmit end to the receive end is fair, when the adjusting module 320 adjusts the transmission after receiving the first feedback information, stopping sending the first feedback information may be selected as an instruction, so that the adjusting module 320 stops adjusting the data transmission and maintains the current transmission rate.

The fairness rule is that: if each operator presets a bandwidth sharing proportion of a shared access network, each operator uses shared bandwidth according to the sharing proportion in accordance with the bandwidth sharing proportion of the shared access network preset by the operator. When congestion occurs on the transport network, if the bearer network can perform transmission according to the previously preset bandwidth sharing proportion, the transmission in this case is fair; if a result of actual transmission on the bearer network does not meet the previously preset bandwidth sharing proportion, the transmission in this case is unfair.

Alternatively, the fairness rule may be that: if no bandwidth sharing proportion of a shared access network is agreed among the operators, each operator equally uses transmission bandwidth.

The first receive module 310 receives the feedback information through the bearer network.

The adjusting module 320 is configured to adjust the data transmission from the first transmit module 330 to the receive end according to the instruction.

When the feedback information received by the first receive module 310 is the first feedback information, the adjusting module 320 adjusts the transmission rate according to the first feedback information. The adjusting module 320 performs gradual speeding down, according to the operator identifier in the first feedback information, on transmission of a service of the operator corresponding to the operator identifier; the adjusting module 320 analyzes the unfairness degree included in the speeding down identifier according to the speeding down identifier in the first feedback information, to obtain a method of how to gradually reduce the transmission rate. If the unfairness degree is high, the transmit end gradually reduces the transmission rate by a relatively large margin; if the unfairness degree is relatively low, the transmit end gradually reduces the transmission rate by a relatively small margin.

When the feedback information received by the first receive module 310 is the second feedback information, the second feedback information includes a rate maintaining identifier. According to the speeding down stop identifier in the second feedback information, the adjusting module 320 enables the first transmit module 330 to maintain a current transmission status, that is, to maintain the current transmission rate at which transmission fairness is achieved among the operators.

Optionally, when the adjusting module 320 adjusts the transmission after receiving the first feedback information, skipping sending the first feedback information anymore may be selected as an instruction. In this case, the adjusting module 320 enables the first transmit module 330 to stop adjusting the transmission and to maintain the current transmission status, that is, to maintain the current transmission rate at which transmission fairness is achieved among the operators.

The first transmit module 330 is configured to send data according to the adjustment of the adjusting module 320.

The first transmit module 330 sends data information according to a command of the adjusting module 320. The data transmission of the first transmit module 330 is controlled and adjusted by the adjusting module 320. The first transmit module 330 may reduce a data transmission rate of a corresponding operator according to a requirement of the adjusting module 320. If an inner data zone of the transmit end is not full, data that is temporarily not sent because of the speeding down is temporarily stored in the inner data zone and is sent by the first transmit module 330 later; if the inner data zone of the transmit end is full, the data that is temporarily not sent because of the speeding down is discarded, and available bandwidth is released for another operator for use.

For the receive end and the transmit end according to this embodiment of the present invention, in a non-LTE network system, when the data transmission is uplink data transmission, the receive end is a base station controller, and the transmit end is a base station; when the data transmission is downlink data transmission, the receive end is a base station, and the transmit end is a base station controller. In an LTE network system, when the data transmission is uplink data transmission, the receive end is a core network, and the transmit end is a base station; when the data transmission is downlink data transmission, the receive end is a base station, and the transmit end is a core network.

The transmit end 300 according to this embodiment of the present invention may correspond to the transmit end in the access network sharing methods according to the embodiments of the present invention, and the foregoing and other operations and/or functions of each module of the transmit end 300 are separately for implementing corresponding processes of the methods in FIG. 1 to FIG. 3. For the purpose of brevity, details are not described herein again.

In this embodiment of the present invention, a transmit end receives feedback information from a receive end, and adjusts transmission according to the feedback information. In a system where multiple operators share a radio access network, because the transmit end receives the feedback information sent from the receive end, the transmit end can adjust the transmission according to information included in the feedback information, so as to achieve transmission fairness.

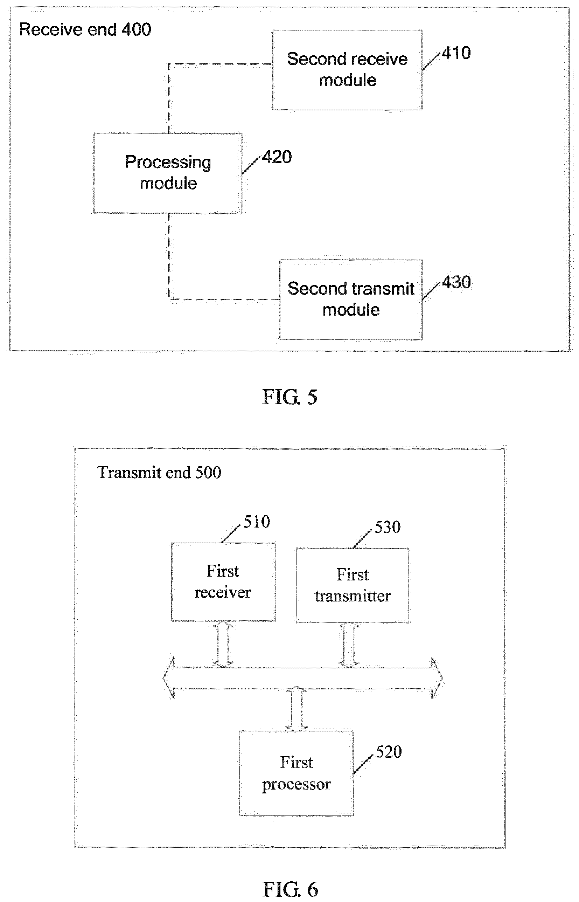

FIG. 5 shows a schematic block diagram of a receive end 400 according to an embodiment of the present invention. FIG. 5 and the receive end 400 disclosed in the description of FIG. 5 may be based on the radio access network sharing methods disclosed in FIG. 1 and FIG. 2 of the embodiments of the present invention and FIG. 3 of the embodiments of the present invention, and may also be based on the apparatus disclosed in FIG. 4 of the embodiments of the present invention.

This embodiment is applicable to a case in which congestion occurs on a transport network. A bearer network, as the transport network, is responsible for data communication between a transmit end and the receive end. The transmit end and the receive end 400 perform data communication by using the bearer network, where the data communication includes uplink data transmission and downlink data transmission. In a case in which congestion does not occur on the bearer network, existing network bandwidth can meet data transmission requirements of different operators, each operator may use surplus bandwidth, and data transmission from the transmit end may not be adjusted; in a case in which congestion occurs on the bearer network, the receive end needs to determine whether the data transmission is fair. A step of determining whether congestion occurs on the transport network is as described in S130, and details are not described herein again.

As shown in FIG. 5, the receive end 400 includes a second receive module 410, a processing module 420, and a second transmit module 430.

The second receive module 410 is configured to receive data sent by the transmit end.

The processing module 420 is configured to determine, according to a fairness rule, whether data transmission from the transmit end to the second receive module 410 is fair, and the processing module is further configured to issue an instruction to the transmit end according to a result of the determining, where the instruction is that the processing module commands the second transmit module to send feedback information to notify the transmit end, or the instruction is that the processing module commands the second transmit module to stop sending feedback information to notify the transmit end, and the fairness rule is a transmission bandwidth occupation proportion preset among operators.

The second transmit module 430 is configured to send the feedback information to the transmit end according to a command of the processing module 420, so that the transmit end adjusts the data transmission to the second receive module 410 according to the instruction; and is further configured to stop sending the feedback information to the transmit end according to a command of the processing module, so that the transmit end adjusts the data transmission to the second receive module 410 according to the instruction.

In this embodiment, the second receive module 410 is further configured to receive data from the transmit end, where the data information is data information of different operators, and the second receive module 410 receives the data information through the bearer network.

The processing module 420 is further configured to perform real-time statistics collection on the received data of the different operators, and determine whether service bandwidth of the operators meets the fairness rule. If the service bandwidth of the operators meets the fairness rule, the processing module 420 determines that the data transmission is fair; if the service bandwidth of the operators does not meet the fairness rule, the processing module 420 determines that the data transmission is unfair. The processing module 420 periodically determines, according to a preset period, whether the data transmission is fair. The fairness rule is that: if each operator presets a bandwidth sharing proportion of a shared access network, each operator uses shared bandwidth according to the sharing proportion in accordance with the bandwidth sharing proportion of the shared access network preset by the operator. When congestion occurs on the transport network, if the bearer network can perform transmission according to the previously preset bandwidth sharing proportion, the transmission in this case is fair; if a result of actual transmission on the bearer network does not meet the previously preset bandwidth sharing proportion, the transmission in this case is unfair.

Alternatively, the fairness rule may be that: if no bandwidth sharing proportion of a shared access network is agreed among the operators, each operator equally uses transmission bandwidth.

The processing module 420 is further configured to: when the result of the determining by the processing module 420 is that the data transmission is unfair, instruct the second transmit module 430 to send first feedback information to the transmit end. The first feedback information includes an operator identifier and a speeding down identifier, where the operator identifier is used to identify an operator who uses, during a process of unfair transmission, more bandwidth than shared bandwidth that can be occupied by the operator. The speeding down identifier is used to trigger the transmit end to reduce a data transmission rate of the operator corresponding to the operator identifier. Optionally, the speeding down identifier may further include information about a data transmission unfairness degree determined by the receive end, where the unfairness degree is determined as follows: the unfairness degree is higher if more bandwidth of another operator is occupied by the operator who uses more bandwidth than the shared bandwidth that can be occupied by the operator; the unfairness degree is lower if less bandwidth of another operator is occupied by the operator who uses more bandwidth than the shared bandwidth that can be occupied by the operator.

The processing module 420 may keep determining, in a periodic manner, whether the data transmission is fair. When the result of the determining by the processing module 420 is that the data transmission is fair, optionally, the processing module 420 instructs the second transmit module 430 to send second feedback information to the transmit end. The second feedback information includes a speeding down stop identifier. Optionally, when the transmit end adjusts the transmission after constantly receiving the first feedback information, the processing module 420 instructs the second transmit module 430 to stop sending the first feedback information to the transmit end.

The second transmit module 430 is configured to send feedback information according to a command of the processing module 420. Specifically, when the result of the determining by the processing module 420 is that the data transmission is unfair, the second transmit module 430 is configured to send the first feedback information to the transmit end. When the result of the determining by the processing module 420 is that the data transmission is fair, optionally, the second transmit module 430 is configured to send the second feedback information to the transmit end; optionally, the second transmit module 430 is configured to stop sending the first feedback information to the transmit end.

The second transmit module 430 sends the first feedback information or the second feedback information to the transmit end through the bearer network.

For the receive end and the transmit end according to this embodiment of the present invention, in a non-LTE network system, when the data transmission is uplink data transmission, the receive end is a base station controller, and the transmit end is a base station; when the data transmission is downlink data transmission, the receive end is a base station, and the transmit end is a base station controller. In an LTE network system, when the data transmission is uplink data transmission, the receive end is a core network, and the transmit end is a base station; when the data transmission is downlink data transmission, the receive end is a base station, and the transmit end is a core network.

The receive end 400 according to this embodiment of the present invention may correspond to the receive end in the access network sharing methods according to the embodiments of the present invention, and the foregoing and other operations and/or functions of each module of the receive end 400 are separately for implementing corresponding processes of the methods in FIG. 1 to FIG. 3. For the purpose of brevity, details are not described herein again.

In the access network sharing method according to this embodiment of the present invention, a receive end determines fairness of transmission, and a transmit end flexibly adjusts a transmission rate according to a result of the determining. Further, the fairness is monitored continuously, so that the transmission rate can be adjusted at any time to maintain stability of a fair state.

FIG. 6 shows a schematic block diagram of a transmit end 500 according to an embodiment of the present invention. FIG. 6 and the transmit end 500 disclosed in the description of FIG. 6 may be based on the radio access network sharing methods disclosed in FIG. 1 and FIG. 2 of the embodiments of the present invention and FIG. 3 of the embodiment of the present invention, and may also be based on the apparatuses disclosed in FIG. 4 and FIG. 5 of the embodiments of the present invention.

This embodiment is applicable to a case in which congestion occurs on a transport network. A bearer network, as the transport network, is responsible for data communication between the transmit end and a receive end. The transmit end 500 and the receive end perform data communication by using the bearer network, where the data communication includes uplink data transmission and downlink data transmission.

In a case in which congestion does not occur on the bearer network, existing network bandwidth can meet data transmission requirements of different operators, each operator may use surplus bandwidth, and data transmission from the transmit end 500 may not be adjusted; in a case in which congestion occurs on the bearer network, the receive end needs to determine whether the data transmission is fair. A step of determining whether congestion occurs on the transport network is as described in S130, and details are not described herein again.

As shown in FIG. 6, the transmit end 500 includes a first receiver 510, a first processor 520, and a first transmitter 530.

The first receiver 510 is configured to acquire an instruction issued by the receive end, where the instruction is issued, after the receive end determines, according to a fairness rule, whether data transmission from the first transmitter to the receive end is fair, by the receive end according to a result of the determining, and the fairness rule is a transmission bandwidth occupation proportion preset among operators.

The first processor 520 is configured to adjust the data transmission from the first transmitter 530 to the receive end according to the instruction.

The first transmitter 530 is configured to send data according to the adjustment of the first processor 520.

In this embodiment of the present invention, the first receiver 510 is further configured to receive first feedback information and second feedback information.

Optionally, if the receive end determines, according to the fairness rule, that the data transmission from the first transmitter 530 to the receive end is unfair, the receive end issues the instruction by sending the first feedback information to the first receiver 510.

The first feedback information includes an operator identifier and a speeding down identifier, where the operator identifier is used to identify an operator who uses, during a process of unfair transmission, more bandwidth than shared bandwidth that can be occupied by the operator. The speeding down identifier is used to trigger the transmit end to reduce a data transmission rate of the operator corresponding to the operator identifier. Optionally, the speeding down identifier may further include information about a data transmission unfairness degree determined by the receive end, where the unfairness degree is determined as follows: the unfairness degree is higher if more bandwidth of another operator is occupied by the operator who uses more bandwidth than the shared bandwidth that can be occupied by the operator; the unfairness degree is lower if less bandwidth of another operator is occupied by the operator who uses more bandwidth than the shared bandwidth that can be occupied by the operator.

Optionally, if the receive end determines, according to the fairness rule, that the data transmission from the first transmitter 530 to the receive end is fair, optionally, the receive end sends the second feedback information to the first receiver 510. Herein, the second feedback information includes a speeding down stop identifier.

Optionally, if the receive end determines, according to the fairness rule, that the data transmission from the transmit end to the receive end is fair, when the first processor 520 adjusts the transmission after receiving the first feedback information, stopping sending the first feedback information may be selected as an instruction, so that the first processor 520 stops adjusting the data transmission and maintains the current transmission rate.

The fairness rule is that: if each operator presets a bandwidth sharing proportion of a shared access network, each operator uses shared bandwidth according to the sharing proportion in accordance with the bandwidth sharing proportion of the shared access network preset by the operator. When congestion occurs on the transport network, if the bearer network can perform transmission according to the previously preset bandwidth sharing proportion, the transmission in this case is fair; if a result of actual transmission on the bearer network does not meet the previously preset bandwidth sharing proportion, the transmission in this case is unfair.

Optionally, the fairness rule may be that: if no bandwidth sharing proportion of a shared access network is agreed among the operators, each operator equally uses transmission bandwidth.

The first receiver 510 receives the feedback information through the bearer network.

The first processor 520 is configured to adjust the data transmission from the first transmitter 530 to the receive end according to the instruction.

When the feedback information received by the first receiver 510 is the first feedback information, the first processor 520 adjusts the transmission rate according to the first feedback information. The first processor 520 performs gradual speeding down, according to the operator identifier in the first feedback information, on transmission of a service of the operator corresponding to the operator identifier; the first processor 520 analyzes the unfairness degree included in the speeding down identifier according to the speeding down identifier in the first feedback information, to obtain a method of how to gradually reduce the transmission rate. If the unfairness degree is high, the transmit end gradually reduces the transmission rate by a relatively large margin; if the unfairness degree is relatively low, the transmit end gradually reduces the transmission rate by a relatively small margin.

When the feedback information received by the first receiver 510 is the second feedback information, the second feedback information includes a rate maintaining identifier. According to the speeding down stop identifier in the second feedback information, the first processor 520 enables the first transmitter 530 to maintain a current transmission status, that is, to maintain the current transmission rate at which transmission fairness is achieved among the operators.

Optionally, when the first processor 520 adjusts the transmission after receiving the first feedback information, skipping sending the first feedback information anymore may be selected as an instruction. In this case, the first processor 520 enables the first transmitter 510 to stop adjusting the transmission and to maintain the current transmission status, that is, to maintain the current transmission rate at which transmission fairness is achieved among the operators.

The first transmitter 530 is configured to send data according to the adjustment of the first processor 520.

The first transmitter 530 sends data information according to a command of the first processor 520. The data transmission of the first transmitter 530 is controlled and adjusted by the first processor 520. The first transmitter 530 may reduce a data transmission rate of a corresponding operator according to a requirement of the first processor 520. If an inner data zone of the transmit end is not full, data that is temporarily not sent because of the speeding down is temporarily stored in the inner data zone and is sent by the first transmitter 530 later; if the inner data zone of the transmit end is full, the data that is temporarily not sent because of the speeding down is discarded, and available bandwidth is released for another operator for use.

For the receive end and the transmit end according to this embodiment of the present invention, in a non-LTE network system, when the data transmission is uplink data transmission, the receive end is a base station controller, and the transmit end is a base station; when the data transmission is downlink data transmission, the receive end is a base station, and the transmit end is a base station controller. In an LTE network system, when the data transmission is uplink data transmission, the receive end is a core network, and the transmit end is a base station; when the data transmission is downlink data transmission, the receive end is a base station, and the transmit end is a core network.

In this embodiment of the present invention, a transmit end receives feedback information from a receive end, and adjusts transmission according to the feedback information. In a system where multiple operators share a radio access network, because the transmit end receives the feedback information sent from the receive end, the transmit end can adjust the transmission according to information included in the feedback information, so as to achieve transmission fairness.

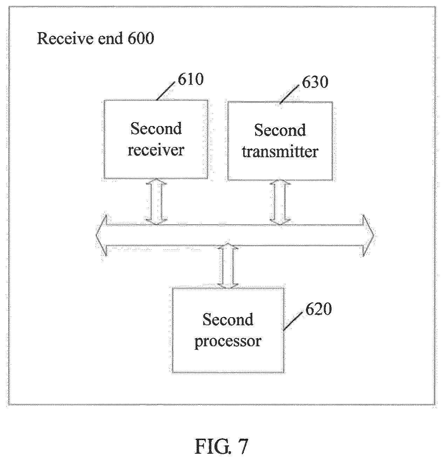

FIG. 7 shows a schematic block diagram of a receive end 600 according to an embodiment of the present invention. FIG. 7 and the receive end 600 disclosed in the description of FIG. 7 may be based on the radio access network sharing methods disclosed in FIG. 1 and FIG. 2 of the embodiments of the present invention and FIG. 3 of the embodiments of the present invention, and may also be based on the apparatuses disclosed in FIG. 4, FIG. 5, and FIG. 6 of the embodiments of the present invention. This embodiment is applicable to a case in which congestion occurs on a transport network. A bearer network, as the transport network, is responsible for data communication between a transmit end and the receive end. The transmit end and the receive end 600 perform data communication by using the bearer network, where the data communication includes uplink data transmission and downlink data transmission.

In a case in which congestion does not occur on the bearer network, existing network bandwidth can meet data transmission requirements of different operators, each operator may use surplus bandwidth, and data transmission from the transmit end may not be adjusted; in a case in which congestion occurs on the bearer network, the receive end needs to determine whether the data transmission is fair. A step of determining whether congestion occurs on the transport network is as described in S130, and details are not described herein again.

As shown in FIG. 7, the receive end 600 includes a second receiver 610, a second processor 620, and a second transmitter 630.

The second transmitter 610 is configured to receive data sent by the transmit end.

The second processor 620 is configured to determine, according to a fairness rule, whether data transmission from the transmit end to the second transmitter 610 is fair, and the second processor 620 is further configured to issue an instruction to the transmit end according to a result of the determining, where the instruction is that the second processor 620 commands the second transmitter 610 to send feedback information to notify the transmit end, or the instruction is that the second processor commands the second transmitter 610 to stop sending feedback information to notify the transmit end, and the fairness rule is a transmission bandwidth occupation proportion preset among operators.

The second transmitter 630 is configured to send the feedback information to the transmit end according to a command of the second processor 620, so that the transmit end adjusts the data transmission to the second transmitter 610 according to the instruction; and is further configured to stop sending the feedback information to the transmit end according to a command of the second processor 620, so that the transmit end adjusts the data transmission to the second transmitter 610 according to the instruction.

In this embodiment, the second transmitter 610 is further configured to receive data from the transmit end, where the data information is data information of different operators, and the second transmitter 610 receives the data information through the bearer network.

The second processor 620 is further configured to perform real-time statistics collection on the received data of the different operators, and determine whether service bandwidth of the operators meets the fairness rule. If the service bandwidth of the operators meets the fairness rule, the second processor 620 determines that the data transmission is fair; if the service bandwidth of the operators does not meet the fairness rule, the second processor 620 determines that the data transmission is unfair. The second processor 620 periodically determines, according to a preset period, whether the data transmission is fair.

The fairness rule is that: if each operator presets a bandwidth sharing proportion of a shared access network, each operator uses shared bandwidth according to the sharing proportion in accordance with the bandwidth sharing proportion of the shared access network preset by the operator. When congestion occurs on the transport network, if the bearer network can perform transmission according to the previously preset bandwidth sharing proportion, the transmission in this case is fair; if a result of actual transmission on the bearer network does not meet the previously preset bandwidth sharing proportion, the transmission in this case is unfair.

Alternatively, the fairness rule may be that: if no bandwidth sharing proportion of a shared access network is agreed among the operators, each operator equally uses transmission bandwidth.

The second processor 620 is further configured to: when the result of the determining by the second processor 620 is that the data transmission is unfair, instruct the second transmitter 630 to send first feedback information to the transmit end. The first feedback information includes an operator identifier and a speeding down identifier, where the operator identifier is used to identify an operator who uses, during a process of unfair transmission, more bandwidth than shared bandwidth that can be occupied by the operator. The speeding down identifier is used to trigger the transmit end to reduce a data transmission rate of the operator corresponding to the operator identifier. Optionally, the speeding down identifier may further include information about a data transmission unfairness degree determined by the receive end, where the unfairness degree is determined as follows: the unfairness degree is higher if more bandwidth of another operator is occupied by the operator who uses more bandwidth than the shared bandwidth that can be occupied by the operator; the unfairness degree is lower if less bandwidth of another operator is occupied by the operator who uses more bandwidth than the shared bandwidth that can be occupied by the operator.

The second processor 620 may keep determining, in a periodic manner, whether the data transmission is fair. When the result of the determining by the second processor 620 is that the data transmission is fair, optionally, the second processor 620 instructs the second transmitter 630 to send second feedback information to the transmit end. The second feedback information includes a speeding down stop identifier. Optionally, when the transmit end adjusts the transmission after receiving the first feedback information, the second processor 620 instructs the second transmitter 630 to stop sending the first feedback information to the transmit end.

The second transmitter 630 is configured to send feedback information according to a command of the second processor 620. Specifically, when the result of the determining by the second processor 620 is that the data transmission is unfair, the second transmitter 630 is configured to send the first feedback information to the transmit end. When the result of the determining by the second processor 620 is that the data transmission is fair, optionally, the second transmitter 630 is configured to send the second feedback information to the transmit end; optionally, the second transmitter 630 is configured to stop sending the first feedback information to the transmit end.

The second transmitter 630 sends the first feedback information or the second feedback information to the receive end through the bearer network.

For the receive end and the transmit end according to this embodiment of the present invention, in a non-LTE network system, when the data transmission is uplink data transmission, the receive end is a base station controller, and the transmit end is a base station; when the data transmission is downlink data transmission, the receive end is a base station, and the transmit end is a base station controller. In an LTE network system, when the data transmission is uplink data transmission, the receive end is a core network, and the transmit end is a base station; when the data transmission is downlink data transmission, the receive end is a base station, and the transmit end is a core network.

In the access network sharing method according to this embodiment of the present invention, a receive end determines fairness of transmission, and a transmit end flexibly adjusts a transmission rate according to a result of the determining. Further, the fairness is monitored continuously, so that the transmission rate can be adjusted at any time to maintain stability of a fair state.

It should be noted that, a sequence of the embodiments is only used for ease of description, but is not used as a basis for comparing superiority or inferiority of the embodiments.

It may be clearly understood by a person skilled in the art that, for the purpose of convenient and brief description, for a detailed working process of the foregoing system, device, and unit, reference may be made to a corresponding process in the foregoing method embodiments, and details are not described herein again.

Based on the foregoing descriptions of the embodiments, a person skilled in the art may clearly understand that the present invention may be implemented by software in addition to a necessary universal hardware platform or by hardware only. In many circumstances, the former is a preferred implementation manner. Based on such an understanding, the technical solutions of the present invention essentially, or the part contributing to the prior art may be implemented in a form of a software product. The software product is stored in a storage medium, and includes several instructions for issuing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

In the several embodiments provided in the present application, it should be understood that the disclosed device and method may be implemented in other manners within the scope of the present application. For example, the described apparatus embodiment is merely exemplary. For example, the unit division is merely logical function division and may be other division in actual implementation. For example, a plurality of units or components may be combined or integrated into another system, or some features may be ignored or not performed. The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments. A person of ordinary skill in the art may understand and implement the embodiments of the present invention without creative efforts.

Further, the described devices and methods and schematic diagrams of different embodiments may be combined with or integrated into another system, technology, or method without departing from the scope of the present application. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A radio access network sharing method, wherein when congestion occurs on a transport network:
determining(110), by a receive end according to a fairness rule, whether data transmission from a transmit end to the receive end is fair, wherein the fairness rule is a transmission bandwidth occupation proportion preset among operators; and
issuing(120), by the receive end, an instruction to the transmit end according to a result of the determining, so that the transmit end adjusts the data transmission to the receive end according to the instruction;
**characterized in that** when the result of the determining, by the receive end according to the fairness rule, whether data transmission from the transmit end to the receive end is unfair,
the issuing, by the receive end, an instruction to the transmit end according to a result of the determining comprises: sending, by the receive end, first feedback information to the transmit end, wherein the first feedback information comprises an operator identifier and a speeding down identifier; and
the so that the transmit end adjusts the data transmission to the receive end according to the instruction comprises:
so that the transmit end reduces, according to the operator identifier and the speeding down identifier, a data transmission rate of an operator corresponding to the operator identifier.

2. The method according to claim 1, wherein when the result of the determining, by the receive end according to the fairness rule, whether data transmission from the transmit end to the receive end is fair,
the issuing, by the receive end, an instruction to the transmit end according to a result of the determining comprises: sending, by the receive end, second feedback information to the transmit end, wherein the second feedback information comprises a speeding down stop identifier; and
the so that the transmit end adjusts the data transmission to the receive end according to the instruction comprises:
so that the transmit end maintains a current rate of the data transmission to the receive end.

3. The method according to claim 1, wherein when the result of the determining, by a receive end according to a fairness rule, whether data transmission from a transmit end to the receive end is fair,
the issuing, by the receive end, the transmit end according to a result of the determining comprises: skipping sending, by the receive end, the first feedback information to the transmit end anymore; and
the so that the transmit end adjusts the data transmission to the receive end according to the instruction comprises:
so that the transmit end maintains a current rate of the data transmission to the receive end.

4. A radio access network sharing method, wherein when congestion occurs on a transport network, the method comprises:
acquiring(210), by a transmit end, an instruction from a receive end, wherein the instruction is issued, after the receive end determines, according to a fairness rule, whether data transmission from the transmit end to the receive end is fair, by the receive end according to a result of the determining, and the fairness rule is a transmission bandwidth occupation proportion preset among operators; and
adjusting(220), by the transmit end, the data transmission to the receive end according to the instruction;
**characterized in that**
when the result of the determining, by the receive end according to the fairness rule, whether the data transmission from the transmit end to the receive end is unfair,
that the instruction is issued, after the receive end determines, according to a fairness rule, whether data transmission from the transmit end to the receive end is fair, by the receive end according to a result of the determining comprises: the receive end sends first feedback information to the transmit end, wherein the first feedback information comprises an operator identifier and a speeding down identifier; and
the adjusting, by the transmit end, the data transmission to the receive end according to the instruction comprises:
reducing, by the transmit end according to the operator identifier and the speeding down identifier, a data transmission rate of an operator corresponding to the operator identifier.

5. The method according to claim 4, wherein when the result of the determining, by the receive end according to the fairness rule, whether the data transmission from the transmit end to the receive end is fair,
that the instruction is issued, after the receive end determines, according to a fairness rule, whether data transmission from the transmit end to the receive end is fair, by the receive end according to a result of the determining comprises: the receive end sends second feedback information to the transmit end, wherein the second feedback information comprises a speeding down stop identifier; and
the adjusting, by the transmit end, the data transmission to the receive end according to the instruction comprises:
maintaining, by the transmit end, a current rate of the data transmission to the receive end.

6. The method according to claim 4, wherein when the result of the determining, by the receive end according to the fairness rule, whether the data transmission from the transmit end to the receive end is fair,
that the instruction is issued, after the receive end determines, according to a fairness rule, whether data transmission from the transmit end to the receive end is fair, by the receive end according to a result of the determining comprises: the receive end does not send the first feedback information to the transmit end anymore; and
the adjusting, by the transmit end, the data transmission to the receive end according to the instruction comprises:
maintaining, by the transmit end, a current rate of the data transmission to the receive end.

7. A receive end in a shared radio access network system, comprising a second receive module(410), a processing module(420), and a second transmit module(430), wherein
the second receive module(410) is configured to receive data sent by a transmit end;
the processing module(420) is configured to determine, according to a fairness rule, whether data transmission from the transmit end to the second receive module(410) is fair, and the processing module(420) is further configured to issue an instruction to the transmit end according to a result of the determining, wherein the instruction is that the processing module(420) commands the second transmit module(430) to send feedback information to notify the transmit end; and the second transmit module(430) is configured to send the feedback information to the transmit end according to a command of the processing module(420) to instruct the transmit end to adjust the data transmission to the second receive module(410) according to the instruction;
**characterized in that**
when the result of the determining, by the processing module(420) according to the fairness rule, whether the data transmission from the transmit end to the second receive module(410) is unfair,
that the processing module(420) issues an instruction to the transmit end according to a result of the determining, wherein the instruction is that the processing module(420) commands the second transmit module(430) to send feedback information to notify the transmit end comprises: the processing module(420) commands the second transmit module(430) to send first feedback information to the transmit end, wherein the first feedback information comprises an operator identifier and a speeding down identifier; and
that the second transmit module(430) is configured to send the feedback information to the transmit end according to a command of the processing module(420) to instruct the transmit end to adjust the data transmission to the second receive module(410) according to the instruction comprises:
the second transmit module(430) is configured to send the feedback information to the transmit end according to a command of the processing module(420) to instruct the transmit end to reduce, according to the operator identifier and the speeding down identifier, a data transmission rate of an operator corresponding to the operator identifier.

8. The receive end according to claim 7, wherein when the result of the determining, by the processing module(420) according to the fairness rule, whether the data transmission from the transmit end to the second receive module(410) is fair,
that the processing module(420) issues an instruction to the transmit end according to a result of the determining, wherein the instruction is that the processing module(420) commands the second transmit module(430) to send feedback information to notify the transmit end comprises: the processing module(420) commands the second transmit module(430) to send second feedback information to the transmit end, wherein the second feedback information comprises a speeding down stop identifier; and
that the second transmit module(430) is configured to send the feedback information to the transmit end according to a command of the processing module(420) to instruct the transmit end to adjust the data transmission to the second receive module(410) according to the instruction comprises:
the second transmit module(430) is configured to send the feedback information to the transmit end according to a command of the processing module(420) to instruct the transmit end to maintain a current rate of the data transmission to the second receive module(410).

9. The receive end according to claim 7, wherein when the result of the determining, by the processing module according to the fairness rule, whether the data transmission from the transmit end to the second receive module is fair,
the processing module is configured to issue an instruction to the transmit end according to the result of the determining, wherein the instruction is that the processing module commands the second transmit module to stop sending the first feedback information to the transmit end, so that the transmit end maintains a current rate of the data transmission to the second receive module.

10. The receive end according to claim 7 or 8 or 9, wherein in a non-Long Term Evolution LTE network, when the data transmission is uplink data transmission, the transmit end is a base station, and the receive end is a base station controller; and when the data transmission is downlink data transmission, the transmit end is a base station controller, and the receive end is a base station.

11. The receive end according to claim 7 or 8 or 9, wherein in an LTE network, when the data transmission is uplink data transmission, the transmit end is a base station, and the receive end is a core network; and when the data transmission is downlink data transmission, the transmit end is a core network, and the receive end is a base station.

12. A shared radio access network system comprising the receive end according to one of claims 7-11 and a transmit end configured to acquire an instruction issued by the receive end, adjust a data transmission to the receive end according to the instruction, and send data according to the adjustment.

13. The shared radio access network system according to claim 12, wherein when the result of the determining, by the receive end according to the fairness rule, whether the data transmission from the first transmit module (330) to the receive end is unfair, the transmit end is further configured to receive first feedback information from the receive end, wherein the first feedback information comprises an operator identifier and a speeding down identifier, and reduce, according to the operator identifier and the speeding down identifier, a data transmission rate for an operator corresponding to the operator identifier.

## Patentansprüche

1. Verfahren zur gemeinsamen Funkzugangsnetznutzung, wobei, wenn in einem Transportnetz eine Überlastung vorliegt:
Ermitteln (110) durch ein Empfangsende gemäß einer Angemessenheitsregel, ob eine Datenübertragung von einem Sendeende an das Empfangsende angemessen ist, wobei die Angemessenheitsregel ein unter Betreibern vorher festgelegter Übertragungsbandbreitebelegungsanteil ist; und
Ausgeben (120) einer Anweisung durch das Empfangsende an das Sendeende gemäß einem Ergebnis des Ermittelns, damit das Sendeende die Datenübertragung an das Empfangsende gemäß der Anweisung anpasst;
**dadurch gekennzeichnet, dass**, wenn das Ergebnis des Ermittelns durch das Empfangsende gemäß der Angemessenheitsregel, ob eine Datenübertragung vom Sendeende an das Empfangsende unangemessen ist,
das Ausgeben einer Anweisung durch das Empfangsende an das Sendeende gemäß einem Ergebnis des Ermittelns Folgendes umfasst: Senden erster Rückmeldungsinformationen durch das Empfangsende an das Sendeende, wobei die ersten Rückmeldungsinformationen einen Betreiberidentifizierer und einen Verlangsamungsidentifizierer umfassen; und
damit das Sendeende die Datenübertragung an das Empfangsende gemäß der Anweisung anpasst Folgendes umfasst:
damit das Sendeende eine mit dem Betreiberidentifizierer korrespondierende Datenübertragungsrate eines Betreibers gemäß dem Betreiberidentifizierer und dem Verlangsamungsidentifizierer reduziert.

2. Verfahren nach Anspruch 1, wobei, wenn das Ergebnis des Ermittelns durch das Empfangsende gemäß der Angemessenheitsregel, ob eine Datenübertragung vom Sendeende an das Empfangsende angemessen ist,
das Ausgeben einer Anweisung durch das Empfangsende an das Sendeende gemäß einem Ergebnis des Ermittelns Folgendes umfasst: Senden zweiter Rückmeldungsinformationen durch das Empfangsende an das Sendeende, wobei die zweiten Rückmeldungsinformationen einen Verlangsamungsbeendigungsidentifizierer umfassen; und
damit das Sendeende die Datenübertragung an das Empfangsende gemäß der Anweisung anpasst Folgendes umfasst:
damit das Sendeende eine momentane Rate der Datenübertragung an das Empfangsende aufrechterhält.

3. Verfahren nach Anspruch 1, wobei, wenn das Ergebnis des Ermittelns durch ein Empfangsende gemäß einer Angemessenheitsregel, ob eine Datenübertragung von einem Sendeende an das Empfangsende angemessen ist,
das Ausgeben durch das Empfangsende an das Sendeende gemäß einem Ergebnis des Ermittelns Folgendes umfasst: Aussetzen des weiteren Sendens der ersten Rückmeldungsinformationen durch das Empfangsende an das Sendeende; und
damit das Sendeende die Datenübertragung an das Empfangsende gemäß der Anweisung anpasst Folgendes umfasst: damit das Sendeende eine momentane Rate der Datenübertragung an das Empfangsende aufrechterhält.

4. Verfahren zur gemeinsamen Funkzugangsnetznutzung, wobei das Verfahren, wenn in einem Transportnetz eine Überlastung vorliegt, Folgendes umfasst:
Erfassen (210) einer Anweisung durch ein Sendeende von einem Empfangsende, wobei die Anweisung, nachdem das Empfangsende gemäß einer Angemessenheitsregel ermittelt hat, ob eine Datenübertragung vom Sendeende an das Empfangsende angemessen ist, durch das Empfangsende gemäß einem Ergebnis des Ermittelns ausgegeben wird und die Angemessenheitsregel ein unter Betreibern vorher festgelegter Übertragungsbandbreitebelegungsanteil ist; und
Anpassen (220) der Datenübertragung durch das Sendeende an das Empfangsende gemäß der Anweisung;
**dadurch gekennzeichnet, dass**,
wenn das Ergebnis des Ermittelns durch das Empfangsende gemäß der Angemessenheitsregel, ob die Datenübertragung vom Sendeende an das Empfangsende unangemessen ist,
dass die Anweisung, nachdem das Empfangsende gemäß einer Angemessenheitsregel ermittelt hat, ob eine Datenübertragung vom Sendeende an das Empfangsende angemessen ist, durch das Empfangsende gemäß einem Ergebnis des Ermittelns ausgegeben wird, Folgendes umfasst: dass das Empfangsende erste Rückmeldungsinformationen an das Sendeende sendet, wobei die ersten Rückmeldungsinformationen einen Betreiberidentifizierer und einen Verlangsamungsidentifizierer umfassen; und
das Anpassen der Datenübertragung durch das Sendeende an das Empfangsende gemäß der Anweisung Folgendes umfasst:
Reduzieren einer mit dem Betreiberidentifizierer korrespondierenden Datenübertragungsrate eines Betreibers durch das Sendeende gemäß dem Betreiberidentifizierer und dem Verlangsamungsidentifizierer.

5. Verfahren nach Anspruch 4, wobei, wenn das Ergebnis des Ermittelns durch das Empfangsende gemäß der Angemessenheitsregel, ob die Datenübertragung vom Sendeende an das Empfangsende angemessen ist,
dass die Anweisung, nachdem das Empfangsende gemäß einer Angemessenheitsregel ermittelt hat, ob eine Datenübertragung vom Sendeende an das Empfangsende angemessen ist, durch das Empfangsende gemäß einem Ergebnis des Ermittelns ausgegeben wird Folgendes umfasst: dass das Empfangsende zweite Rückmeldungsinformationen an das Sendeende sendet, wobei die zweiten Rückmeldungsinformationen einen Verlangsamungsbeendigungsidentifizierer umfassen; und
das Anpassen der Datenübertragung durch das Sendeende an das Empfangsende gemäß der Anweisung Folgendes umfasst:
Aufrechterhalten einer momentanen Rate der Datenübertragung durch das Sendeende an das Empfangsende.

6. Verfahren nach Anspruch 4, wobei, wenn das Ergebnis des Ermittelns durch das Empfangsende gemäß der Angemessenheitsregel, ob die Datenübertragung vom Sendeende an das Empfangsende angemessen ist,
dass die Anweisung, nachdem das Empfangsende gemäß einer Angemessenheitsregel ermittelt hat, ob eine Datenübertragung vom Sendeende an das Empfangsende angemessen ist, durch das Empfangsende gemäß einem Ergebnis des Ermittelns ausgegeben wird Folgendes umfasst: dass das Empfangsende die ersten Rückmeldungsinformationen nicht mehr an das Sendeende sendet; und
das Anpassen der Datenübertragung durch das Sendeende an das Empfangsende gemäß der Anweisung Folgendes umfasst:
Aufrechterhalten einer momentanen Rate der Datenübertragung durch das Sendeende an das Empfangsende.

7. Empfangsende in einem System zur gemeinsamen Funkzugangsnetznutzung, das ein zweites Empfangsmodul (410), ein Verarbeitungsmodul (420) und ein zweites Sendemodul (430) umfasst, wobei
das zweite Empfangsmodul (410) zum Empfangen von durch ein Sendeende gesendeten Daten konfiguriert ist;
das Verarbeitungsmodul (420) zum Ermitteln gemäß einer Angemessenheitsregel, ob eine Datenübertragung vom Sendeende an das zweite Empfangsmodul (410) angemessen ist, konfiguriert ist und das Verarbeitungsmodul (420) ferner zum Ausgeben einer Anweisung an das Sendeende gemäß einem Ergebnis des Ermittelns konfiguriert ist, wobei die Anweisung darin besteht, dass das Verarbeitungsmodul (420) dem zweiten Sendemodul (430) ein Kommando zum Senden von Rückmeldungsinformationen zur Benachrichtigung des Sendeendes gibt; und das zweite Sendemodul (430) zum Senden der Rückmeldungsinformationen an das Sendeende gemäß einem Kommando des Verarbeitungsmoduls (420) zum Anweisen des Sendeendes zur Anpassung der Datenübertragung an das zweite Empfangsmodul (410) gemäß der Anweisung konfiguriert ist;
**dadurch gekennzeichnet, dass**,
wenn das Ergebnis des Ermittelns durch das Verarbeitungsmodul (420) gemäß der Angemessenheitsregel, ob die Datenübertragung vom Sendeende an das zweite Empfangsmodul (410) unangemessen ist,
dass das Verarbeitungsmodul (420) eine Anweisung an das Sendeende gemäß einem Ergebnis des Ermittelns ausgibt, wobei die Anweisung darin besteht, dass das Verarbeitungsmodul (420) dem zweiten Sendemodul (430) ein Kommando zum Senden von Rückmeldungsinformationen zur Benachrichtigung des Sendeendes gibt, Folgendes umfasst: dass das Verarbeitungsmodul (420) dem zweiten Sendemodul (430) ein Kommando zum Senden erster Rückmeldungsinformationen an das Sendeende gibt, wobei die ersten Rückmeldungsinformationen einen Betreiberidentifizierer und einen Verlangsamungsidentifizierer umfassen; und
dass das zweite Sendemodul (430) zum Senden der Rückmeldungsinformationen an das Sendeende gemäß einem Kommando des Verarbeitungsmoduls (420) zum Anweisen des Sendeendes zur Anpassung der Datenübertragung an das zweite Empfangsmodul (410) gemäß der Anweisung konfiguriert ist Folgendes umfasst:
dass das zweite Sendemodul (430) zum Senden der Rückmeldungsinformationen an das Sendeende gemäß einem Kommando des Verarbeitungsmoduls (420) zum Anweisen des Sendeendes zum Reduzieren einer mit dem Betreiberidentifizierer korrespondierenden Datenübertragungsrate eines Betreibers gemäß dem Betreiberidentifizierer und dem Verlangsamungsidentifizierer konfiguriert ist.

8. Empfangsende nach Anspruch 7, wobei, wenn das Ergebnis des Ermittelns durch das Verarbeitungsmodul (420) gemäß der Angemessenheitsregel, ob die Datenübertragung vom Sendeende an das zweite Empfangsmodul (410) angemessen ist,
dass das Verarbeitungsmodul (420) eine Anweisung an das Sendeende gemäß einem Ergebnis des Ermittelns ausgibt, wobei die Anweisung darin besteht, dass das Verarbeitungsmodul (420) dem zweiten Sendemodul (430) ein Kommando zum Senden von Rückmeldungsinformationen zur Benachrichtigung des Sendeendes gibt, Folgendes umfasst: dass das Verarbeitungsmodul (420) dem zweiten Sendemodul (430) ein Kommando zum Senden zweiter Rückmeldungsinformationen an das Sendeende gibt, wobei die zweiten Rückmeldungsinformationen einen Verlangsamungsbeendigungsidentifizierer umfassen; und
dass das zweite Sendemodul (430) zum Senden der Rückmeldungsinformationen an das Sendeende gemäß einem Kommando des Verarbeitungsmoduls (420) zum Anweisen des Sendeendes zur Anpassung der Datenübertragung an das zweite Empfangsmodul (410) gemäß der Anweisung konfiguriert ist Folgendes umfasst:
dass das zweite Sendemodul (430) zum Senden der Rückmeldungsinformationen an das Sendeende gemäß einem Kommando des Verarbeitungsmoduls (420) zum Anweisen des Sendeendes zum Aufrechterhalten einer momentanen Rate der Datenübertragung an das zweite Empfangsmodul (410) konfiguriert ist.

9. Empfangsende nach Anspruch 7, wobei, wenn das Ergebnis des Ermittelns durch das Verarbeitungsmodul gemäß der Angemessenheitsregel, ob die Datenübertragung vom Sendeende an das zweite Empfangsmodul angemessen ist,
das Verarbeitungsmodul zum Ausgeben einer Anweisung an das Sendeende gemäß dem Ergebnis des Ermittelns konfiguriert ist, wobei die Anweisung darin besteht, dass das Verarbeitungsmodul dem zweiten Sendemodul ein Kommando zum Beenden des Sendens der ersten Rückmeldungsinformationen an das Sendeende gibt, damit das Sendeende eine momentane Rate der Datenübertragung an das zweite Empfangsmodul aufrechterhält.

10. Empfangsende nach Anspruch 7 oder 8 oder 9, wobei das Sendeende in einem "non-Long-Term-Evolution"-LTE-Netz, wenn die Datenübertragung eine Uplink-Datenübertragung ist, eine Basisstation und das Empfangsende eine Basisstationssteuerung ist; und, wenn die Datenübertragung eine Downlink-Datenübertragung ist, das Sendeende eine Basisstationssteuerung und das Empfangsende eine Basisstation ist.

11. Empfangsende nach Anspruch 7 oder 8 oder 9, wobei das Sendeende in einem LTE-Netz, wenn die Datenübertragung eine Uplink-Datenübertragung ist, eine Basisstation und das Empfangsende ein Kernnetz ist; und, wenn die Datenübertragung eine Downlink-Datenübertragung ist, das Sendeende ein Kernnetz und das Empfangsende eine Basisstation ist.

12. System zur gemeinsamen Funkzugangsnetznutzung, das das Empfangsende nach einem der Ansprüche 7-11 und ein Sendeende, das zum Erfassen einer durch das Empfangsende ausgegebenen Anweisung, zum Anpassen einer Datenübertragung an das Empfangsende gemäß der Anweisung und zum Senden von Daten gemäß der Anpassung konfiguriert ist, umfasst.

13. System zur gemeinsamen Funkzugangsnetznutzung nach Anspruch 12, wobei das Sendeende, wenn das Ergebnis des Ermittelns durch das Empfangsende gemäß der Angemessenheitsregel, ob die Datenübertragung vom ersten Sendemodul (330) an das Empfangsende unangemessen ist, ferner zum Empfangen erster Rückmeldungsinformationen vom Empfangsende, wobei die ersten Rückmeldungsinformationen einen Betreiberidentifizierer und einen Verlangsamungsidentifizierer umfassen, und zum Reduzieren einer mit dem Betreiberidentifizierer korrespondierenden Datenübertragungsrate für einen Betreiber gemäß dem Betreiberidentifizierer und dem Verlangsamungsidentifizierer konfiguriert ist.

## Revendications

1. Procédé de partage de réseau d'accès radio, consistant, quand une congestion se produit sur un réseau de transport, à :
déterminer (110), par un terminal de réception selon une règle d'équité, si une émission de données, d'un terminal d'émission au terminal de réception, est équitable, la règle d'équité étant un taux d'occupation de bande passante d'émission prédéfini parmi des opérateurs ; et
émettre (120), par le terminal de réception, une instruction vers le terminal d'émission selon un résultat de la détermination, de sorte que le terminal d'émission règle l'émission de données vers le terminal de réception selon l'instruction ;
le procédé étant **caractérisé en ce que** :
quand le résultat de la détermination, par le terminal de réception selon la règle d'équité, de si l'émission de données, du terminal d'émission au terminal de réception, est inéquitable,
l'émission, par le terminal de réception, d'une instruction vers le terminal d'émission selon un résultat de la détermination, consiste à : envoyer, par le terminal de réception, une première information de retour au terminal d'émission, la première information de retour comprenant un identifiant d'opérateur et un identifiant de décélération ; et
le réglage, par le terminal d'émission, de l'émission de données vers le terminal de réception selon l'instruction consiste à :
réduire, par le terminal d'émission, selon l'identifiant d'opérateur et l'identifiant de décélération, une vitesse d'émission de données d'un opérateur correspondant à l'identifiant d'opérateur.

2. Procédé selon la revendication 1, dans lequel, quand le résultat de la détermination, par le terminal de réception selon la règle d'équité, de si l'émission de données, du terminal d'émission au terminal de réception, est équitable,
l'émission, par le terminal de réception, d'une instruction vers le terminal d'émission selon un résultat de la détermination, consiste à : envoyer, par le terminal de réception, une seconde information de retour au terminal d'émission, la seconde information de retour comprenant un identifiant d'arrêt de décélération ; et
le réglage, par le terminal d'émission, de l'émission de données vers le terminal de réception selon l'instruction consiste à :
maintenir, par le terminal d'émission, une vitesse actuelle de l'émission de données vers le terminal de réception.

3. Procédé selon la revendication 1, dans lequel, quand le résultat de la détermination, par un terminal de réception selon une règle d'équité, de si l'émission de données, d'un terminal d'émission au terminal de réception, est équitable,
l'émission, par le terminal de réception, vers le terminal d'émission selon un résultat de la détermination, consiste à : omettre l'étape d'envoi, par le terminal de réception, de la première information de retour vers le terminal d'émission ; et
le réglage, par le terminal d'émission, de l'émission de données vers le terminal de réception selon l'instruction consiste à :
maintenir, par le terminal d'émission, une vitesse actuelle de l'émission de données vers le terminal de réception.

4. Procédé de partage de réseau d'accès radio, le procédé consistant, quand une congestion se produit sur un réseau de transport, à :
acquérir (210), par un terminal d'émission, une instruction en provenance d'un terminal de réception, l'instruction étant émise par le terminal de réception selon un résultat de la détermination, après que le terminal de réception a déterminé, selon une règle d'équité, si une émission de données, du terminal d'émission au terminal de réception, est équitable, et la règle d'équité étant un taux d'occupation de bande passante d'émission prédéfini parmi des opérateurs ; et
régler (220), par le terminal d'émission, l'émission de données vers le terminal de réception selon l'instruction ;
le procédé étant **caractérisé en ce que** :
quand le résultat de la détermination, par le terminal de réception selon la règle d'équité, de si l'émission de données, du terminal d'émission au terminal de réception, est inéquitable,
l'émission de l'instruction, par le terminal de réception selon un résultat de la détermination, après que le terminal de réception a déterminé, selon une règle d'équité, si une émission de données, du terminal d'émission au terminal de réception, est équitable consiste à : envoyer, par le terminal de réception, une première information de retour au terminal d'émission, la première information de retour comprenant un identifiant d'opérateur et un identifiant de décélération ; et
le réglage, par le terminal d'émission, de l'émission de données vers le terminal de réception selon l'instruction consiste à :
réduire, par le terminal d'émission, selon l'identifiant d'opérateur et l'identifiant de décélération, une vitesse d'émission de données d'un opérateur correspondant à l'identifiant d'opérateur.

5. Procédé selon la revendication 4, dans lequel, quand le résultat de la détermination, par le terminal de réception selon la règle d'équité, de si l'émission de données, du terminal d'émission au terminal de réception, est équitable,
l'émission de l'instruction, par le terminal de réception selon un résultat de la détermination, après que le terminal de réception a déterminé, selon une règle d'équité, si une émission de données, du terminal d'émission au terminal de réception, est équitable consiste à : envoyer, par le terminal de réception, une seconde information de retour au terminal d'émission, la seconde information de retour comprenant un identifiant d'arrêt de décélération ; et
le réglage, par le terminal d'émission, de l'émission de données vers le terminal de réception selon l'instruction consiste à :
maintenir, par le terminal d'émission, une vitesse actuelle de l'émission de données vers le terminal de réception.

6. Procédé selon la revendication 4, dans lequel, quand le résultat de la détermination, par le terminal de réception selon la règle d'équité, de si l'émission de données, du terminal d'émission au terminal de réception, est équitable,
l'émission de l'instruction, par le terminal de réception selon un résultat de la détermination, après que le terminal de réception a déterminé, selon une règle d'équité, si une émission de données, du terminal d'émission au terminal de réception, est équitable consiste à : ne plus envoyer, par le terminal de réception, la première information de retour au terminal d'émission ; et
le réglage, par le terminal d'émission, de l'émission de données vers le terminal de réception selon l'instruction consiste à :
maintenir, par le terminal d'émission, une vitesse actuelle de l'émission de données vers le terminal de réception.

7. Terminal de réception dans un système de réseau d'accès radio partagé, comprenant un second module de réception (410), un module de traitement (420) et un second module d'émission (430),
le second module de réception (410) étant configuré pour recevoir des données envoyées par un terminal d'émission ;
le module de traitement (420) étant configuré pour déterminer, selon une règle d'équité, si une émission de données, du terminal d'émission au second module de réception (410), est équitable, et le module de traitement (420) étant en outre configuré pour émettre une instruction vers le terminal d'émission selon un résultat de la détermination, l'instruction étant que le module de traitement (420) commande le second module d'émission (430) pour envoyer une information de retour pour notifier le terminal d'émission ; et
le second module d'émission (430) étant configuré pour envoyer l'information de retour au terminal d'émission selon une commande du module de traitement (420) pour donner l'instruction au terminal d'émission de régler l'émission de données vers le second module de réception (410) selon l'instruction ;
le terminal de réception étant **caractérisé en ce que** :
quand le résultat de la détermination, par le module de traitement (420) selon la règle d'équité, de si l'émission de données, du terminal d'émission au second module de réception (410), est inéquitable,
l'émission, par le module de traitement (420), d'une instruction vers le terminal d'émission selon un résultat de la détermination, l'instruction étant que le module de traitement (420) commande le second module d'émission (430) pour envoyer une information de retour pour notifier le terminal d'émission, comprend : la commande, par le module de traitement (420), du second module d'émission (430) pour envoyer une première information de retour au terminal d'émission, la première information de retour comprenant un identifiant d'opérateur et un identifiant de décélération ; et
la configuration du second module d'émission (430) pour envoyer l'information de retour au terminal d'émission selon une commande du module de traitement (420) pour donner l'instruction au terminal d'émission de régler l'émission de données vers le second module de réception (410) selon l'instruction, comprend :
la configuration du second module d'émission (430) pour envoyer l'information de retour au terminal d'émission selon une commande du module de traitement (420) pour donner l'instruction au terminal d'émission de réduire, selon l'identifiant d'opérateur et l'identifiant de décélération, une vitesse d'émission de données d'un opérateur correspondant à l'identifiant d'opérateur.

8. Terminal de réception selon la revendication 7, dans lequel, quand le résultat de la détermination, par le module de traitement (420) selon la règle d'équité, de si l'émission de données, du terminal d'émission au second module de réception (410), est équitable,
l'émission, par le module de traitement (420), d'une instruction vers le terminal d'émission selon un résultat de la détermination, l'instruction étant que le module de traitement (420) commande le second module d'émission (430) pour envoyer une information de retour pour notifier le terminal d'émission, consiste à : commander, par le module de traitement (420), le second module d'émission (430) pour envoyer une seconde information de retour au terminal d'émission, la seconde information de retour comprenant un identifiant d'arrêt de décélération ; et
configurer le second module d'émission (430) pour envoyer l'information de retour au terminal d'émission selon une commande du module de traitement (420) pour donner l'instruction au terminal d'émission de régler l'émission de données vers le second module de réception (410) selon l'instruction, comprend :
la configuration du second module d'émission (430) pour envoyer l'information de retour au terminal d'émission selon une commande du module de traitement (420) pour donner l'instruction au terminal d'émission de maintenir une vitesse actuelle de l'émission de données vers le second module de réception (410).

9. Terminal de réception selon la revendication 7, dans lequel, quand le résultat de la détermination, par le module de traitement selon la règle d'équité, de si l'émission de données, du terminal d'émission au second module de réception, est équitable,
le module de traitement est configuré pour émettre une instruction vers le terminal d'émission selon le résultat de la détermination, l'instruction étant que le module de traitement commande le second module d'émission pour arrêter l'envoi de la première information de retour vers le terminal d'émission, de sorte que le terminal d'émission maintienne une vitesse actuelle de l'émission de données vers le second module de réception.

10. Terminal de réception selon la revendication 7 ou 8 ou 9, dans lequel, dans un réseau qui n'est pas d'évolution à long terme (LTE), quand l'émission de donnée est une émission de données en liaison montante, le terminal d'émission est une station de base et le terminal de réception est un contrôleur de station de base ; et quand l'émission de données est une émission de données en liaison descendante, le terminal d'émission est un contrôleur de station de base et le terminal de réception est une station de base.

11. Terminal de réception selon la revendication 7 ou 8 ou 9, dans lequel, dans un réseau LTE, quand l'émission de donnée est une émission de données en liaison montante, le terminal d'émission est une station de base et le terminal de réception est un réseau central ; et quand l'émission de données est une émission de données en liaison descendante, le terminal d'émission est un réseau central et le terminal de réception est une station de base.

12. Système de réseau d'accès radio partagé comprenant le terminal de réception selon l'une des revendications 7 à 11 et un terminal d'émission configuré pour acquérir une instruction émise par le terminal de réception, régler une émission de données vers le terminal de réception selon l'instruction, et envoyer des données selon le réglage.

13. Système de réseau d'accès radio partagé selon la revendication 12, dans lequel, quand le résultat de la détermination, par le terminal de réception selon la règle d'équité, de si l'émission de données, du premier module d'émission (330) au terminal de réception, est inéquitable, le terminal d'émission est en outre configuré pour recevoir une première information de retour en provenance du terminal de réception, la première information de retour comprenant un identifiant d'opérateur et un identifiant de décélération, et réduire, selon l'identifiant d'opérateur et l'identifiant de décélération, une vitesse d'émission de données pour un opérateur correspondant à l'identifiant d'opérateur.
